(19) Europäisches Patentamt
European Patent Office
Office européen des brevets

(11) Numéro de publication: **0 086 128 B1**

(12) **FASCICULE DE BREVET EUROPEEN**

(45) Date de publication du fascicule du brevet: **18.05.88**

(51) Int. Cl.$^4$: **H 04 M 11/08**

(21) Numéro de dépôt: **83400137.2**

(22) Date de dépôt: **20.01.83**

# (54) Système de transmission asynchrone, notamment pour système de vidéotex interactif.

(30) Priorité: **04.02.82 FR 8202120**

(43) Date de publication de la demande:
**17.08.83 Bulletin 83/33**

(45) Mention de la délivrance du brevet:
**18.05.88 Bulletin 88/20**

(84) Etats contractants désignés:
**BE CH DE GB IT LI NL SE**

(56) Documents cités:
**DE-B-2 914 665**
**FR-A-1 395 396**
**GB-A-2 033 699**
**US-A-3 979 719**

(73) Titulaire: **L'Etat Français, représenté par le Ministre des P.T.T. (Centre National d'Etudes des Télécommunications)**
**38-40 rue du Général Leclerc**
**F-92131 Issy-Les-Moulineaux (FR)**

(73) Titulaire: **Etablissement Public de Diffusion dit "Télédiffusion de France"**
**21-27 rue Barbès**
**F-92120 Montrouge (FR)**

(72) Inventeur: **Botrel, José**
**Le Bignon Ercé près Liffré**
**F-35340 Liffré (FR)**
Inventeur: **Harari, Sami**
**39, Avenue du Docteur Netter**
**F-75012 Paris (FR)**
Inventeur: **Briere, Joseph**
**9, Allée des Poiriers Chantepie**
**F-35510 Cesson-Sévigné (FR)**
Inventeur: **Louvel, Bernard**
**309, Avenue du Général Patton**
**F-35000 Rennes (FR)**

(74) Mândataire: **Le Guen, Louis François**
**Cabinet Louis Le Guen 1, avenue Edouard VII**
**B.P. 91**
**F-35802 Dinard Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 086 128 B1

Courier Press, Leamington Spa, England.

## Description

La présente invention concerne un système de protection contre les erreurs pour transmission asynchrone bidirectionnelle de donnéees qui peut notamment être utilisé dans les systèmes de transmission utilisant un réseau téléphonique commuté, tel qu'un réseau public. Le système suivant l'invention peut, notamment, être utilisé dans les nouveaux services télématiques à transmission bidirectionnelle asynchrone, tel que les systèmes vidéotex interactifs et, en particulier, le système de l'annuaire électronique.

Dans les systèmes de vidéotex interactifs, des informations à afficher sur un écran du type télévision sont transmises par une station centrale vers le terminal d'un abonné utilisateur à une vitesse de, par exemple, 1200 bauds et des informations de service sont transmises par le terminal de l'abonné vers la station centrale à une vitesse de, par exemple, 75 bauds. Dans les deux sens, les informations sont transmises en mode asynchrone, en utilisant, suivant l'avis V3 du CCITT, l'alphabet No. 5 pour le codage de l'informaiton et, selon l'avis V4 du CCITT, l'utilisation d'un moment ou bit de parité.

En pratique, l'extension à un large public des nouveaux services télématiques, dont le vidéotex interactif, conduit à une utilisation plus fréquente de la portion local du réseau téléphonique. Or, c'est dans cette partie du réseau que la transmission des données est la plus perturbée.

La méthode de base de protection contre les erreurs en transmission asynchrone de données consiste actuellement essentiellement en une détection d'erreur par contrôle de l'élément binaire de parité. Cette méthode, qui ne permet pas de détecter, dans un caractère, les erreurs paires, est notoirement insuffisante pour l'exploitation des donnés transmises en mode asynchrone sur la portion locale du réseau.

Parmi les méthodes de correction d'erreurs par retranemission, on connaît la méthode à "retransmission continue", notée ARQ-NAK, qui suppose l'utilisation d'un circuit duplex intégral, où l'émetteur transmet les blocs d'information successifs sans attendre d'accusé de réception entre deux blocs et ne s'interrompt que lorsqu'il reçoit un accusé de réception négatif. L'émetteur retransmet alors le bloc erroné ainsi que les blocs suivants.

Un objet de l'invention consiste à prévoir un système de transmission asynchrone, en particulier pour systèmes de vidéotex interactifs, dans lequel on utilise par caractère un moment de parité, dans lequel on utilise la méthode à retransmission continue du type, ARQ-NAK, dans lequel on prévoit des moyens de détection et éventuellement de correction d'erreurs et dans lequel on refuse des rafales désynchronisées.

L'objet de l'invention mentionné ci-dessus est atteint par la mise en oeuvre des combinaisons de moyens définies dans les revendications complétant la présente description.

Dans la description qui va suivre, on se référera, pour identifier certains circuits de traitements numériques, à l'ouvrage technique "De la logique câblée aux microprocesseurs" par MM. J—M Bernard, J. Hugon et R. Le Corvec, édité en 1979, en quatre tomes aux éditions Eyrolles, dans la collection technique et scientifique des télécommunications (CNET-ENST).

Il faut encore noter qu'avec le système de l'invention, les mots codes sont transmis sans identifications individuelles, ce qui évite d'avoir à associer à chaque mot code un octet affecté à l'identification qui, dans les systèmes connus, s'appelle l'octet d'indice ou de continuité, par exemple. Ce gain d'un octet par mot code permet de mieux utiliser le milieu de transmission. On verra, dans le suite, comment, dans la station émission, un compteur de mots codes envoyés et, dans le terminal, un compteur de mots codes reçus, ces deux compteurs fonctionnant en synchronisme, permettent l'identification des mots codes. En cas de perte de mots codes due à des erreurs de transmission, une procédure de répétition permet d'après le contenu du compteur du terminal de restaurer la synchronisation.

Les caractéristiques de l'invention apparaîtront plus clairement à la lecture de la description suivante d'un exemple de réalisation, ladite description étant faite en relation avec les dessins joints, parmi lesquels:

la Fig. 1 est un bloc-diagramme général d'un système de transmission utilisé par l'invention,

la Fig. 2 est un bloc-diagramme plus détaillé du générateur de mots codes du système de la Fig. 1,

la Fig. 3 est un bloc-diagramme plus détaillé du récepteur de mots codes du système de la Fig. 1,

les Figs 4a à 4c forment, assemblées comme l'indique la Fig. 4d, un organigramme illustrant le fonctionnement du générateur de la Fig. 2,

la Fig. 5 est un organigramme illustrant la phase 1 du fonctionnement du récepteur de la Fig. 3,

les Figs. 6a et 6b, assemblées comme l'indique la Fig. 6c, forment un organigramme illustrant la phase 2 du fonctionnement du récepteur de la Fig. 3,

la Fig. 7 est un organigramme illustrant la phase 3 du fonctionnement du récepteur de la Fig. 3,

les Figs 8a et 8b, assemblées comme l'indique la Fig. 8c, forment un organigramme illustrant la phase 4 du fonctionnement du récepteur de la Fig. 3, et

les Figs. 9 à 11 sont des organigrammes illustrant respectivement les phases 5 à 7 du fonctionnement du récepteur de la Fig. 3.

Description générale du système (Fig. 1)

Le système de transmission de la Fig. 1 comprend un concentrateur S et un terminal d'abonné T relié par une ligne téléphonique L, laquelle peut être une ligne commutée de réseau téléphonique public.

La station centrale S comprend une unité de gestion centrale UGC, un convertisseur parallèle/série CPS1, un convertisseur série/parallèle CSP1, un modem Y1 et un générateur de mots codes GEN.

Le modem Y1 est un modem classique conforme à l'avis V23 du CCITT qui est relié à la ligne L et qui est capable de transmettre des informations à 1200 bauds vers le terminal T et d'en recevoir des informations à 75 bauds. La sortie locale du modem Y1 est reliée au convertisseur série-parallèle CSP1. L'unité de gestion centrale UGC possède trois bus: le bus de donnés BUSSD, un bus d'adressage BUSSA et un bus de commande BUSSC. Le générateur GEN est, d'une part, relié aux bus BUSSD, BUSSA et BUSSC pour échanger des informations avec l'unité de gestion central UGC, et, d'autre part, a une sortie parallèle reliée à l'entrée parallèle du convertisseur parallèle/série CPS1 dont la sortie série est reliée à l'entrée série locale du modem Y1. Le convertisseur CSP1 est relié aux trois bus de UGC.

Le terminal T comprend une unité de gestion terminal UGT, un convertisseur série/parallèle CSP2, un convertisseur parallèle/série CPS2, un modem Y2 et un récepteur de mots codes REC.

Le modem Y2 est un modem classique conforme à l'avis V23 du CCITT qui est relié à la ligne L et est capable de recevoir de la station S des informations à 1200 bauds et de lui transmettre des informations à 75 bauds. La sortie locale du modem Y2 est reliée à l'entrée série du convertisseur CSP2 dont la sortie parallèle est reliée à l'entrée de données du récepteur REC. Le récepteur REC est relié aux trois bus de l'unité de gestion terminale UGT, c'est-à-dire son bus de données BUSTD, son bus d'adressage BUSTA et son bus de commande BUSTC. L'entrée locale du modem Y2 est reliée à la sortie série du convertisseur CPS2, qui est par ailleurs relié aux trios bus de UGT.

En pratique, les convertisseurs CPS1 et CSP2 sont, de préférence, respectivement constitués par la partie émission et la partie réception d'un circuit UART (Universal Asynchronous Receiver Transmitter) du type COM 2502. Les convertisseurs CPS2 et CSP1 sont, de préférence, des circuits UART du type ACIA 6850 MOTOROLA.

Description du générateur GEN (Fig. 2)

Le générateur de mots codes GEN, Fig. 2, comprend un séquenceur SQ1. Il comprend encore un circuit générateur de parité GP dont l'entrée de données est reliée au bus BUSSD, dont l'entrée de commande P est reliée au séquenceur SQ1 et dont la sortie est reliée à l'entrée d'un registre EMIS. Le registre EMIS est à entrée et sortie parallèles, permet le décalage à gauche, quand son entrée de commande dg est activée, et le décalage à droite, quand son entrée dd est activée. Les entrées dg et dd du circuit EMIS sont reliées au séquenceur SQ1. Le séquenceur SQ1 est, de préférence, du type de celui qui est décrit dans l'ouvrage technique mentionné plus haut, Tome 3, pages 21 à 24. Le générateur de parité GP est, de préférence, du type de celui décrit dans le même ouvrage, Tome 2, pages 51 à 53.

La sortie du registre EMIS est reliée, d'une part, à la sortie OUTPUT du générateur GEN et, d'autre part, à l'entrée d'opérande A d'un circuit de calcul arithmétique et logique CAL1. Le circuit CAL1 comporte une entrée d'opérande B qui est reliée en parallèle aux sorties de trois registres NUL1, GDEX1 et RDEX1. Le circuit CAL1 a une sortie EGAL1 et une entrée de commande SEL1 qui sont reliées au séquenceur SQ1, et une sortie F reliée à l'entrée d'un registre R1. La sortie du registre R1 est reliée, premièrement, à l'entrée du circuit GP, deuxièmement, à l'entrée du registre RDEX1 et, troisièmement, à l'entrée d'une mémoire MS. De plus, un registre X est relié au bus BUSSD.

En pratique, le circuit CAL1 est, de préférence, constitué par l'ensemble de deux circuits du type 74181, commercialisé par exemple par la société Texas Instrument. Un circuit semblable est décrit dans l'ouvrage précité, Tome 1, pages 94 à 96. Sa sortie EGAL1 est à "1" quand les opérandes A et B sont égaux. Dans le cas particulier d'utilsation, parmi les seize états possibles, l'entrée SEL1 ne prend que trois états: un état dans lequel la sortie F de CAL1 transmet à R1 le caractère appliqué à l'entrée A, un état dans lequel la sortie F transmet le caractère appliqué à l'entrée B et un état dans lequel la sortie F transmet le résultat de l'opération A+B, où A et B représentent respectivement les caractères appliqués aux entrées A et B.

Le registre NUL1 est un registre de huit éléments binaires, qui sont tous nuls.

Le registre GDEX1 est un registre à huit éléments binaires, qui contient les coefficients d'un polynome générateur G(x), qui, dans l'application présente, est:

$$G(x)=x^7+x^3+1$$

Autrement dit, le registre GDEX1 contient le caractère 10001001.

Le registre RDEX1 est un registre de huit éléments binaires, dans lequel sont mis en mémoire les résultats intermédiaires de la division polynômiale effectuée au moyen du circuit CAL1. Initialement, avant chaque division polynômiale, le registre RDEX1 est remis à "0" par une entrée RAZ reliée au séquenceur SQ1.

La mémoire MS est organisée en seize blocs de seize octets chacun. A la mémoire MS, est associée une mémoire auxiliaire MS' qui est organisée en seize blocs de deux éléments binaires chacun. Ces deux éléments binaires forment des indicateurs AE et DOR d'état pour chaque bloc de la mémoire MS.

Aux mémoires MS et MS', sont associés, pour l'écriture, deux compteurs d'adressage NMOTR1 et NOCTR1, et, pour la lecture, deux compteurs d'adressage NMOTE et NOCTE. Le registre X est également utilisable pour adresser en lecture la mémoire MS', à la place du compteur NMOTE. Le registre NM, qui contient la combinaison numérique 0100, est associé au compteur NMOTE pour former un registre désigné par NUMMOT.

En mode d'écriture, le registre NMOTR1 permet l'adressage de l'un des seize blocs de MS et MS', tandis que le registre NOCTR1 permet l'adressage d'un octet dans un bloc de MS. En mode de lecture, le compteur NMOTE permet l'adressage de l'un des seize blocs de MS et MS', tandis que le registre NOCTE permet l'adressage d'un octet dans un bloc de MS. On verra dans la suite, à l'occasion de l'émission de la séquence de resynchronisation, l'utilité du registre NUMMOT1.

Chaque fois que le 16ᵉ octet d'un mot code vient d'être enregistré dans un bloc de la mémoire d'adresse NMOTR1, à la même adresse, dans la mémoire MS', l'élément binaire AE est mis à "1". Chaque fois qu'un mot code correspondant au bloc de la mémoire MS d'adresse NMOTE a été émis, à la même adresse, dans la mémoire MS', les éléments binaires AE et DOR sont respectivement mis à "0" et à "1", et le compteur NMOTE est incrémenté. Quand, au test de l'élément binaire AE à la nouvelle adresse NMOTE, il est trouvé égal à "0", l'élément binaire DOR de même adresse est remis à "0".

Le générateur GEN comprend encore un registre CONTROL1 capable d'enregistrer deux éléments binaires MP et DR, un registre ETAT1 capable d'enregistrer deux éléments binaires MP et RV, un compteur COMPT1, un compteur ESR, un registre SYNC1, un registre SYNC2 et un registre NUL2.

Les entrées parallèles du registre CONTROL1 sont reliées au bus BUSSD. Dans ce registre, l'élément binaire MP permet de sélecter le mode de fonctionnement du générateur GEN. Si MP=1, le générateur GEN applique la procédure suivant l'invention; si MP=0, le générateur GEN n'applique pas la procédure et est donc transparent. L'élément DR permet à l'unité de gestion UGC de formuler une demande de répétition. Si DR=0, le générateur GEN fonctionne en fonction des octets reçu dans le circuit GP de l'unité UGC; si DR=1, il déclenche, de plus, une procédure de répétition qui sera décrite plus en détail dans la suite.

Les sorties parallèles du registre ETAT1 peuvent être lues par l'unité UGC. Dans ce registre, l'élément binaire MP est la copie de l'élément binaire MP du registre CONTROL1, tandis que l'élément binaire RV indique, lorsqu'il est à 1, que le registre EMIS est libre pour recevoir un caractère du bus BUSSD, à travers le circuit GP.

Le compteur COMPT1 a son entrée reliée au séquenceur SQ1 qui lui transmet des impulsions de séquencement permettant de compter le nombre des boucles de traitement. Le compteur ESR, qui peut être constitué par l'ensemble de deux bascules d'états, a également son entrée reliée au séquenceur SQ1. Quand le contenu du compteur ESR est différent de 0, il indique que la séquence de resynchronisation est à émettre ou en cours d'émission.

Le registre SYNC1 est un registre à huit éléments binaires qui contient, par exemple, l'octet SYN du code n° 5 du CCITT, le registre SYNC2 est un registre à huit éléments binaires qui contient, dans l'exemple décrit, le même octet SYN et le registre NUL2 est un registre à huit éléments binaires qui sont tous nuls. Les sorties des registres SYNC1, SYNC2 et NUL2 peuvent être sélectivement reliées à la sortie OUTPUT sous la commande du séquenceur SQ1.

Enfin, le générateur GEN comprend un système de sélection SLS des difféents registres ETAT1, CONTROL1, EMIS et X, ce système SLS fonctionnant à partir des bus d'adresse BUSSA et de commande BUSSC, d'une manière classique.

La sortie OUTPUT est reliée à l'entrée de données du convertisseur CPS1. Par ailleurs, le convertisseur CPS1 a une sortie de commande ACS qui, au niveau haut, indique que le convertisseur peut être chargé et une entrée de commande CHS qui, au niveau haut, active le chargement dans le convertisseur, de l'information présente sur la sortie OUTPUT du générateur GEN. Dès que le convertisseur est chargé, sa sortie ACS passe au niveau bas tant que les éléments binaires chargés n'ont pas tous été transmis en série vers l'entrée locale du modem Y1.

Description du récepteur REC (Fig. 3)

Devant le récepteur REC, le convertisseur CSP2 a une sortie parallèle, une sortie de commande CP, une entrée de commande SELT et une sortie de détection d'erreur de parité EP.

Le récepteur de mots codes REC comporte un seuenceur SQ2, analogue au séquenceur SQ1 de GEN. Il a une entré de données INPUT reliée à la sortie parallèle du convertisseur CPS2, une entrée CP reliée à une sortie de commande de CSP2, une sortie de commande SELT vers CSP2 et une entrée de signal EP reliée à une sortie correspondante du convertisseur CSP2.

Le signal CP à l'entrée CP est mis au niveau haut par CSP2 quand ce dernier a reçu un caractère complet. Le signal SELT au niveau haut à la sortie SELT a pour effet de valider la sortie parallèle de CSP2 ainsi que de ramener le signal CP à l'état bas. Quand le signal SELT n'est pas au niveau haut, la sortie parallèle de CSP2 est portée à haute impédance. Le signal EP, à l'entrée EP, est au niveau haut quand le caractère tansmis par CSP2 à REC est affecté d'une erreur de parité.

L'entrée INPUT, à laquelle sont successivement appliqués les caractères reçus du concentrateur S, est reliée à l'entrée d'un registre à décalage REG à entrée et sortie parallèles. La sortie du registre REG est reliée, d'une part, à l'entrée d'opérande A d'un circuit arithmétique et logique CAL2 et, d'autre part, au bus de données BUSTD de l'unité UGT. Le registre REG a une entrée dg de commande de décalage à gauche et une entrée dd de commande de décalage à droite, qui sont reliées au séquenceur SQ2.

Le circuit CAL2, qui est d'un type identique au circuit CAL1, a son entrée d'opérande B reliée aux sorties de sept registres NUMMOT2, MASQ, SYNC3, SYNC4, NUL3, GDEX2 et RDEX2. Sa sortie F est reliée à l'entrée d'un registre R2 dont la sortie est reliée, premièrement à l'entrée du registre REG, deuxièmement à l'entrée d'un registre XP/NM, troisièmement, à l'entrée du registre RDEX2 et, quatrièmement à l'entrée de données d'une mémoire MT. Le circuit CAL2 a une entrée de commande SEL2 et une sortie EGAL2 dont les fonctions sont respectivement identiques à celles de l'entrée de commande SEL1 et de la sortie EGAL1 de CAL1. Elles sont reliées au séquenceur SQ2. Le registre XP/NM a sa sortie, d'une part, reliée à l'entrée d'opérande A de CAL2 et, d'autre part, à la sortie vers le bus BUSTD. Il comporte une entrée de commande dg de décalage à gauche reliée au séquenceur SQ2.

La mémoire MT est organisée en octets, avec une capacité minimale de quinze octets. La sortie de la mémoire MT est reliée au bus BUSTD et une de ses entrées d'adressage est reliée à la sortie d'un compteur, modulo 16, NOCT tandis que l'autre est reliée à un circuit de sélection SLT. La sortie du compteur NOCT est également reliée, d'une part, à l'entrée de signal d'un registre ADRPF et d'autre part, à la premìre entrée d'un comparateur COMPA. La seconde entrée du comparateur COMPA est reliée à la sortie du registre ADRPF et sa sortie EGAL3 est reliée au séquenceur SQ2.

Le compteur NUMMOT2 est, en pratique, formé d'un registre de quatre élément binaires dont le contenu est constant et égal à 0100 correspondant aux éléments binaires b8 à b5 et un compteur X, modulo 16, représentant les éléments binaires b4 à b1 et effectuant le comptage des mots codes reçus. La partie X de NUMMOT2 comporte une entrée de remise à zéro RAZ et une entrée de signal +1.

Le registre MASQ est un registre à huit éléments binaires qui comporte huit entrées parallèles, une entrée de commande de chargement direct L et un entrée de décalage à gauche dcg, qui sont reliées au séquenceur SQ2. Comme on le verra dans la suite, le registre MASQ est utilisé dans la phase de correction.

Les registres SYNC3, SYNC4 et GDEX2 sont des registres dont les contenus sont respectivement identiques à ceux des registres SYNC1, SYNC2 et GDEX1. Le registre RDEX2 est un registre identique à RDEX1, mais dans lequel sont mis en mémoire les résultats de la division polynomiale effectuée au moyen du circuit CAL2.

Le circuit de réception REC comprend encore une bascule 1PF dont l'entée est reliée à l'entrée EP et qui est mise à "1" lorsqu'un caractère provenant du convertisseur CSP2 est signalé avec erreur de parité, une bascule 2PF dont l'entrée est également reliée à l'entrée EP et qui est mise à "1" lorsqu'un caractère provenant de CSP2 est signalé avec erreur de parité et que la bascule 1PF est déjà à "1".

Il comprend encore un registre de contrôle CONTROL2 dont l'entrée d'écriture est reliée au bus BUSTD et qui contient notamment un élément binaire MP qui, à "0", commande le fonctionnement sans procédure et, à "1", le fonctionnement avec procédure, c'est-à-dire notamment avec protection contre les erreurs. Il comporte aussi un registre ETAT2 dont la sortie de lecture est reliée au bus BUSTD et qui comprend notamment les éléments binaires MP, EP, CP, DR et DD. En mode sans procédure, l'élément binaire EP permet d'indiquer s'il y a une erreur de parité et l'élément CP est utilisé pour signaler un caractère présent dans REG. EN mode avec procédure, l'élément binaire DR indique un état de demande de répétition et l'élément binaire DD indique que des données sont disponibles dans la mémoire MT, c'est-à-dire qu'un mot code correct a été reçu.

Enfin, le récepteur REC comprend un compteur COMPT2 qui, comme COMPT1, est utilisé dans la phase de division polynômiale.

Le circuit SLT, déjà mentionné plus haut, permet, outre l'adressage en lecture de la mémoire MT, d'une manière plus générale, la sélection des registres du récepteur REC. Il fonctionne à partir des bus d'adresse BUSTA et de contrôle BUSTC de l'unité de gestion terminale UGT.

Fonctionnement du système

Transmission sans procédure

Initialement, dans GEN et dans REC, l'élément binaire MP des registres CONTROL1 et CONTROL2 est à "0", ce qui implique que la transmission est faite sans procédure. Donc, l'entrée P du circuit GP est à "1" et le circuit GP transmet successivement, après calcul de parité, vers la sortie OUTPUT, à travers le registre EMIS, les caractères qui lui sont transmis sur le bus BUSSD.

Démarrage de la transmission avec procédure

Le mode de transmission sans procédure est utilisé pour déclencher, dans le récepteur REC du terminal T, l'activation de la mise en oeuvre de la réception des mots codes transmis avec procédure. Ainsi, le concentrateur S commence par transmettre, sans procédure, une séquence d'octets prédéterminée, telle que la séquence ESC, 3/A, 6/9, 4/4, désignée ci-après plus simplement par séquence DIR.

Dans le récepteur REC, l'élément binaire MP du registre CONTROL2 est encore à "0". La sortie du registre REG est directement reliée au bus BUSTD. Donc, la séquence DIR est appliquée directement à l'unité de gestion UGT. Quand l'unité UGT a reconnu cette séquence DIR, elle met à "1" l'élément binaire MP dans CONTROL2 et fait répondre, par le convertisseur CPS2, le modem Y2, le modem Y1 et le convertisseur CSP1, à l'unité de commande UGC, une autre séquence d'octets prédéterminée, telle que la séquence ESC, 3/A, 7/3, plus un octet de status du mode de fonctionnement du terminal, désignée ci-après plus simplement par séquence AR, qui sert d'accusé de réception. L'octet de status du mode de fonctionnement du terminal a une configuration dans laquelle un élément binaire de rang ou poids déterminée, tel que b3, est à "1", indiquant que la procédure est maintenant active dans le terminal. Les autres éléments binaires de l'octet de status, à part l'élément de parité b8, peuvent constituer des informations sur d'autres fonctions du terminal.

A la réception de la séquence AR, l'unité UGC met à "1" l'élément binaire MP du registre CONTROL1 de GEN.

Fonctionnement du générateur GEN, organigrammes des Figs. 4a à 4c

Pour la description du fonctionnement du générateur GEN, Fig. 2, on pourra se reporter aux organigrammes des Figs. 4a à 4c qui décrivent notamment les séquences de fonctionnement suivantes: transmission d'un caractère de UGC jusqu'à la mémoire MS, division d'un caractère transmis, envois successifs en ligne des seize premiers octets d'un mot code, fonctinnement après la transmission du 16ᵉ caractère d'un mot code, envoi de la séquence de resynchronisation après une demande de répétition de la part du terminal.

Transmission d'un caractère de UGC à MS

L'unité UGC teste l'élément binaire RV qui doit se trouver à "1" pour qu'un octet soit transmis à GP par BUSSD. Par ailleurs, on rappelle que le séquenceur SQ1 connaît, à l'aide du compteur NMOTR1, la première adresse de la mémoire MS pour laquelle AE et DOR sont égaux à "0".

L'unité UGC transmet alors un caractère de sept éléments binaires, que l'on supposera pour l'instant non nul, par le bus BUSSD vers le circuit GP. L'élément binaire de parité b8 est calculé dans GP et ajouté aux sept premiers pour former un octet qui est transmis au registre EMIS. L'élément binaire RV est mis à "0" par SQ1 pour interdire l'arrivée d'un nouvel octet. SQ1 sélectionne les contenus des registres EMIS et NUL1 comme opérandes A et B de CAL1. Le résultat de non égalité est testé par SQ1 qui, par SEL1, sélectionne dans CAL1 l'opération F=A, puis le chargement de la sortie F dans le registre R1. Le contenu du registre R1 est alors chargé dans la mémoire MS à l'adresse courante NMOTR et NOCTR. A noter que pendant ces dernières opérations, le contenu du registre EMIS est resté inchangé.

Si le caractère transmis par UGC était nul et qu'il correspond au premier octet à former dans un mot code, l'égalité A=B détectée dans SQ1 fait que ce dernier remet RV à "1" et ne charge pas MS.

Division des caractères transmis d'un mot code

A la suite du chargement dans la mémoire MS du 1ᵉʳ octet d'un mot code, commence sa division par le polynôme générateur. A cet effet, SQ1 sélectionne le contenu du registre RDEX1, nul à ce moment, comme opérande B, puis l'opération F=A⊕B et, par ailleurs charge le compteur COMPT1 à la valeur "8". Puis SQ1 charge le résultat F dans R1, désactive l'entrée P de GP pour inhiber le calcul de parité et charge R1 dans le registre EMIS à travers le circuit GP. L'élément binaire b8 du contenu de EMIS est ensuite testé par SQ1. S'il est égal à "1", SQ1 sélectionne les contenus de EMIS et du registre GDEX1 comme nouveaux opérandes A et B du circuit CAL1, puis l'opération F=A⊕B, puis charge le résultat dans R1, puis à nouveau dans EMIS. Un décalage à gauche, avec insertion d'un "0" en b1 est alors appliqué au registre EMIS. Si, dans le test précédent de l'élément binaire b8 du contenu de EMIS, il avait été trouvé égal à "0", le décalage à gauche indiqué ci-dessus aurait été directement effectué. Puis le compteur COMPT1 est décrémenté d'une unité et l'élément binaire b8 de EMIS est à nouveau testé, et ainsi de suite, jusqu'à ce que le contenu du compteur COMPT1 soit nul.

A ce moment, Fig. 4c, le compteur NOCTR1 est incrémenté, puis son contenu est testé.

S'il est inférieur à "16", SQ1 sélectionne le contenu de EMIS comme opérande A de CAL1, puis l'opération F=A, puis charge le résultat dans R1, puis dans le registre RDEX1, puis valide le calcul de parité dans GP et remet RV à "1", ce qui autorise la transmission d'un nouveau caractère de UGC à EMIS.

Si le contenu du compteur NOCTR1 est trouvé égal à "16", le contenu de EMIS est décalé à droite en commandant la commande dd, avec insertion d'un "0" en b8. Puis SQ1 sélectionne le contenu de EMIS comme opérande A, puis l'opération F=A, puis la validation du calcul de parité dans GP, puis le chargement du résultat de F dans R1, puis le transfert du contenu de R1 dans EMIS à travers le circuit GP qui calcule l'élément binaire de parité b8 du 16ᵉ octet du mot code. Puis SQ1 sélectionne l'opération F=A, puis le chargement du résultat de F, à travers R1, dans MS à l'adresse courante NMOTR1 et NOCTR1=16. Puis l'élément binaire AE de MS' est, à l'adresse NMOTR1, mis à "1", indiquant que les seize premiers octets d'un mot code sont dans la mémoire MS. Puis le compteur NOCTR1 est remis à "1" et le compteur NMOTR1 est incrémenté. Enfin, l'élément RV est mis à "1" autorisant l'insertion d'un nouveau caractère de sept éléments binaires de UGC dans EMIS.

Envoi des octets du mot code, en l'absence de demande de répétition (Fig. 4a)

En l'absence de demande de répétition l'élément binaire DR est égal à "0". Le séquenceur SQ1 teste l'entrée ACS que l'on va supposer à "1" ce qui indique que le générateur GEN est autorisé à émettre vers CPS1. Puis, à l'adresse NMOTE, on teste si AE est égal à "1", le test de DOR n'ayant ici pas de sens puisqu'il ne s'agit pas d'une demande de répétition, puis le contenu de ESR qui, pour la même raison, est trouvé égal à "0".

Fonctionnement pour l'envoi des seize premiers caractères

Le contenu du compteur NOCTE est testé et trouvé inférieur à "17", ce qui entraîne le chargement successif dans CPS1 des seize premiers octets du mot code de la mémoire dont l'adresse est NMOTE et NOCTE, NOCTE étant incrémenté à chaque chargement.

Envoi du dix-septième caractère

Quand le contenu du compteur NOCTE est trouvé égal à "17", le contenu du registre NUL2 est chargé dans CPS1, c'est-à-dire que le 17ᵉ caractère du mot code est transmis. Puis, dans MS', l'élément binaire DOR de l'adresse NMOTE est mis à "1" tandis que l'élément binaire AE de même adresse est remis à "0". De plus, le compteur NOCTE est remis à "1" et le compteur NMOTE est incrémenté. L'élément AE de l'adresse courante NMOTE est testé S'il est trouvé égal à "0", l'élément binaire DOR de même adresse est mis à "0".

Fonctionnement en cas de demande de répétition

On suppose ici qu'un mot code a été mal reçu dans le terminal T qui a demandé sa répétition au concentrateur S. Tout d'abord, il faut noter que la partie X du compteur NUMMOT2 du terminal compte, modulo 16, les mots codes reçus. Donc l'unité UGT sait donner un numéro à chaque mot code, ce numéro correspondant à son adresse NMOTE dans la mémoire MS du générateur GEN.

Pour déclencher la répétition, l'unité UGT transmet au concentrateur S une séquence: NAK, NUMMOT, où NAK est le caractère correspondant du code n° 5 du CCITT et NUMMOT est le contenu du compteur NUMMOT2, plus la parité, ce contenu identifiant le mot mal reçu.

Dès réception de cette demande, l'unité UGC charge les quatre éléments binaires de poids faibles du caractère NUMMOT reçu dans le registre X par le bus BUSSD, puis met à "1" l'élément binaire DR du registre CONTROL1. On rappelle, par ailleurs, que, dans le mémoire MS', pour chaque mot code émis, l'élément binaire DOR est mis à "1" et l'élément binaire AE à "0".

Comme l'illustre l'organigramme de la Fig. 4a, SQ1 procède ensuite au test de l'élément binaire DR qui est trouvé égal à "1", ce qui entraîne le test de l'élément binaire DOR à l'adresse X. SQ1 fait adresser MS' par le registre X. Si DOR est à "1", cela signifie que le mot code d'adresse X fait effectivement partie du domaine répétable. On verra dans la suite d'autres cas particuliers.

Après ce test supposé positif, le contenu du registre X est chargé dans le registre pointeur NMOTE. SQ1 met le compteur ESR à la valeur "1", charge "1" dans le pointeur NOCTE et remet à "0" l'élément binaire DR. Si le test a été négatif, le contenu du registre NMOTE est inchangé, mais SQ1 met aussi ESR à "1", charge "1" dans NOCTE et remet DR à "0".

On teste ensuite si le générateur GEN peut émettre, c'est-à-dire, comme précédemment, si l'entrée ACS est à "1", puis à l'adresse NMOTE si l'élément binaire DOR est à "1" ou l'élément binaire AE à "1".

Le test précédent étant supposé positif, on teste ESR qui est trouvé à "1", ce qui entraîne la sélection du chargement du contenu du registre SYNC1 dans le convertisseur CPS1 par OUTPUT, puis la mise du contenu de ESR à "2". Puis, au cours du dérouelement du programme d'émission suivant, le séquenceur SQ1 teste encore l'élément binaire DR qui est trouvé à "0", puis l'entrée ACS, DOR ou AE à "1", ESR à "2", ce qui entraîe la sélection du chargement du contenu du registre SYNC2 dans CPS1 et la mise à "3" de ESR. Au déroulement suivant du programme d'émission, on trouve ESR="3" ce qui entraîne la sélection du chargement du contenu du registre NUMMOT1 dans CPS1, c'est-à-dire du numéro du mot code émis ce qui doit servir au terminal à réenchaîner les mots codes. Enfin, ESR est remis à "0". On se retrouve alors dans le cas de l'envoi du mot code en l'absence de demande de répétition décrit plus haut.

On notera qu'un fois terminée l'émission du mot code d'adresse NMOTE, que le pointeur NMOTE ait été chargé à partir du registre X ou que son contenu soit resté inchangé, ce pointeur est incrémenté normalement ce qui veut dire que l'on émet les mots codes suivants, qui ont éventuellement déjà été émis.

Successions des lectures et écritures dans MS

Comme l'indiquent les organigrammes des Figs. 4a à 4c, chaque lecture pour envoi d'un octet par CPS1, que ce soit un octet de mot code ou un octet de séquence de resynchronisation, est éventuallement suivie d'un écriture d'un octet provenant de UGC dans MS et d'un traitement de division.

Dans le cas où après un envoi, le test des éléments binaires AE et DOR de MS' à l'adresse NMOTR1 et celui de RV donne un résultat égal à "1", l'écriture n'a pas lieu et on revient au début du programme d'envoi.

Fonctionnement au démarrage de la transmission avec procédure

Dans ce cas, aucune séquence spéciale de synchronisation n'est requise, l'échange des messages DIR et AR indiquant clairement que le premier octet, non nul, reçu par le terminal T, après cet échange, est le premier octet du premier mot code.

Arrêt de la transmission avec procédure

Pour arrêter la transmission avec procédure, l'unité UGC fait envoyer la séquence ESC, 3/A, 6/A, 4/4, cette séquence étant bien entendu traitée dans le générateur GEN. Après avoir reçu cette séquence, l'unité UGT remet l'élément binaire MP du registre CONTROL2 à "0", et le terminal T renvoie une séquence AR dans laquelle l'octet de status a son élément binaire b3 à "0". L'UGC, recevant cette séquence, remet à "0" l'élément binaire MP de CONTROL1.

Fonctionnement du récepteur REC

Au moment initial de la transmission, le récepteur fonctionne sans protection contre les erreurs. Quand le signal CP de CSP2, indiquant un caractère présent, passe au niveau haut, le signal SELT passe à "1" et CSP2 valide des sorties et remet CP à "0".

Le registre REG est alors chargé par l'octet affiché aux sorties de CSP2 et le signal EP, tel qu'il est transmis par CSP2, est répété dans le registre ETAT2 pour y constituer l'élément binaire EP. Ensuite, le signal SELT est remis à "0" et l'élément binaire CP du registre ETAT2 est mis à "1".

Le registre REG est lu, à travers le bus BUSTD, par l'unité UGT et l'élément CP est remis à "0".

Ce cycle se poursuit jusqu'à ce que l'unité UGT reconnaisse le message DIR et qu'elle mette l'élément binaire MP à "1". On passe alors au mode de fonctionnement avec procédure de protection contre les erreurs. Ce mode de fonctionnement comporte sept phases.

Phase 1 (Fig. 5)

Cette phase consiste à rechercher le premier charatère non nul reçu et charge par CSP2 dans REG. Ce caractère est alors le premier octet du mot code attendu, ce qui déclenche la phase 2.

Comme le montre l'organigramme de la Fig. 5, le séquenceur SQ2 sélectionne les contenus de REG et de NUL3 comme opérandes A et B du circuit CAL2. Quand le premier octet non nul est reçu, la sortie EGAL2 passe à "0" ce qui entraîne que SQ2 charge "1" dans le compteur NOCT et donc le récepteur passe en phase 2.

Phase 2 (Figs. 6a et 6b)

Dans cette phase, on teste l'état de l'élément binaire EP. En cas d'erreur de parité, la bascule 1PF et, éventuellement la bascule 2PF sont au travail tandis que le registre ADRPF est chargé de la valeur atteinte par le compteur NOCT au moment du changement d'état de 1PF.

Le contenu de REG est transféré dans la mémoire MT à l'endroit pointé par le compteur NOCT, puis ce compteur est incrémenté. Pour réaliser cette opération, SQ2 sélectionne le contenu de REG comme opérande A dans CAL2, puis l'opération F=A, puis le résultat de F est chargé dans le registre R2, puis dans MT à l'adresse NOCT.

Le même contenu de REG est ensuite soumis à la division polynômiale par le polynôme (G(x) et le reste de cette division est mémorisé dans le registre RDEX2. Lorsque le contenu de NOCT atteint la valeur "16", le récepteur passe en phase 3.

Ces opérations sont effectuées de la manière suivante. Le contenu de REG étant toujours l'opérande A de CAL2, SQ2 sélectionne le contenu de RDEX2 comme opérande B, puis l'opération F=A⊕B. Par ailleurs, le compteur COMPT2 est chargé à la valeur "8". Ensuite, le résultat de F est chargé dans le registre R2, puis dans le registre REG.

Si l'élément binaire b8 du contenu de REG est égal à "1", les contenus de REG et de GDEX2 sont alors choisis comme opérandes A et B de CAL2, où l'opération F=A⊕B est effectuée. Puis le résultat de F est chargé dans R2, puis dans REG. Ensuite on procède par dg à un décalage à gauche du contenu de REG et un "0" est inséré comme élément binaire b1.

Si l'élément b8 du contenu de REG était égal à "0", au lieu d'être un "1" comme on l'a supposé ci-dessus, on passe directement au décalage à gauche mentionné ci-dessus.

Enfin le compteur COMPT2 est décrémenté. Le test de ce compteur est alors effectué. Tant que son contenu est différent de "0", on retrouve le fonctionnement précédent. Quand son contenu passe à "0", l'opération F=A est sélectionnée dans CAL2, puis le résultat de F est chargé dans R2, puis de R2 dans le registre RDEX2.

On teste alors le contenu du pointeur NOCT. S'il n'est pas égal à "16", on revient au début de la phase 2. Quand il devient égal à "16", on passe en phase 3, comme déjà indiqué ci-dessus.

Phase 3 (Fig. 7)

Dans cette phase le traitement de l'erreur de parité est identique à celui de la phase 2. L'algorithme de la division est appliqué à cet octet "16", mais l'octet lui-même n'est pas mis en mémoire MT. Seul le reste de la division, c'est-à-dire le reste final, est conservé.

Le 16[e] caractère est normalement chargé dans le registre REG, puis il y est décalé à gauche, pour supprimer l'élément binaire de parité, en commandant l'entrée dg, et un "0" est inséré en b1. Puis les contenus de REG et de RDEX2 sont sélectionnés comme opérandes A et B de CAL2, et l'opération F=A⊕B est commandée. Le résultat de F est chargé dans R2, puis dans REG dont le contenu est décalé à droite, en commandant l'entrée dd, et un "0" est inséré en B8. L'opération F=A est ensuite sélectionnée, puis le résultat de F est chargé dans R2, puis dans RDEX2. C'est ensuite le passage en phase 4.

Phase 4 (Figs. 8a et 8b)

Cette phase correspond à la réception de l'octet "17" d'un mot code. Suivant les valeurs de l'octet "17", du reste contenu dans le registre RDEX2 et du nombre de caractères reçus avec parité fausse, un des trois traitements A, B ou C suivants est effectué.

A—Le caractère "17" nul, le contenu de RDEX2 est nul et il n'y a pas eu de parité fausse, c'est à dire que les bascules 1PF et 2PF sont à "0".

La partie X de MUMMOT2 est incrémentée, les bascules 1PF, 2PF, les registres ADRPF, MASQ et RDEX2 sont réinitialisés à "0", le pointeur NOCT est initialisé à "1" et l'élément binaire DD du registre ETAT2 est mis à "1".

L'unité UGT doit alors lire les quinze octets d'information disponibles dans la mémoire MT avant qu'un nouveau caractère soit transmis par CSP2.

B—Le caractère "17" est nul, le contenu de RDEX2 est différent de "0" et il n'y a qu'une seule parité fausse, avec 1PF à "1" et 2PF à "0". Il s'ensuit une exécution de l'algorithme de recherche d'un élément binaire faux.

Le résultat de cet algorithme est de fournir au pointeur NOCT l'adresse mémoire de l'octet erroné ainsi que, dans le registre MASQ, un masque pour la correction.

L'égalité entre NOCT et le contenu de ADRPF permet alors d'effectuer la correction et le traitement se poursuit comme en A ci-dessus. Dans le cas contraire, une demande de répétition est demandée.

En effet, le rang de l'élément binaire erroné dans la suite S' des coefficients du polynôme S'(x) est donné par la valeur de l'indice *p*, telle de $x^p$=R'(x) modulo G(x). Toutefois, si cet élément binaire n'appartient pas à l'octet dont la parité est mauvaise, la correction n'est pas effectuée et la répétion demandée. On effectue alors le traitement C suivant.

C—Le caractère "17" est nul et il y a plusieurs parités fausses, avec la bascule 2PF à "1", ou bien le caractère "17" est différent du contenu de NUL3, ou encore on a le résultat NOCT différent de ADRPF mentionné ci-dessus en B, ou encore le caractère "17" est nul, la bascule 1PF est à "1", mais RDEX2 est nul, ou, enfin, le caractère "17" est nul, la bascule 1PF est à "0" et RDEX2 n'est pas nul.

Le contenu du registre NUMMOT2 est alors chargé dans le registre XP/NM, l'élément binaire DR du registre ETAT2 est mis à "1".

Les bascules 1PF, 2Pf, et les registres ADRPF, MASQ et RDEX2 sont réinitialisés. Le récepteur REC passe alors en phase 5.

L'émission de la demande de répétition est effectuée par l'unité UGT qui dispose dans le registre NM du caractère contenant le numéro du mot code à répéter. A cet effet, l'unité UGT scrute périodiquement l'élément binaire DR du registre ETAT2. En variante, le passage à l'état "1" de DR pourrait engendrer une interruption de programme vers UGT.

Phase 5 (Fig. 9)

Dans cette phase, le récepteur est en recherche du premier caractère de la séquence de resynchronisation, c'est-à-dire après l'envoi d'un demande de retransmission, du caractère SYN.

Lorsque le caractère SYN, c'est à dire celui dont le contenu est dans le registre SYNC3, est détecté, l'élément binaire DR est remis à "0" et le récepteur passe en phase 6.

Phase 6 (Fig. 10)

Dans cette phase, on compare le caractère reçu avec le contenu du registre SYNC4 pour retrouver le second caractère SYN de la séquence de resynchronisation.

S'il y a égalité, le récepteur passe en phase 7, sinon l'élément binaire DR de ETAT2 est remis à "1" et il y a retour en phase 5.

Phase 7 (Fig. 11).

Dans cette phase, le caractère reçu doit être identique au contenu du registre NUMMOT2. Si c'est le cas, le dispositif passe en phase 1, sinon l'élément binaire DR est mis à "1" et il y a retour en phase 5.

Résumé du fonctionnement dans le terminal

Dans le récepteur REC, comme le font apparaître en détail la Fig. 3 et la Fig. 5 et suivantes, les éléments de décision concernant le traitement d'un mot code sont les suivants:

—configuration du 17ᵉ octet reçu,

—nombre des octets "1" à "16" reçu affectés d'une erreur de parité,

—valeur des coefficients du polynôme R'(x) constituant le reste de la division polynômiale dans REC.

La suite S' des éléments binaires formés des octets "1" à "15" reçu et des éléments binaires b1 à b7 du 16ᵉ octet reçu correspond aux coefficients d'un polynôme S'(x). Le polynôme S'(x) est égal au polynôme S(x) correspondant au mot code émis, en cas d'absence d'erreur de transmission. Les coefficients de R'(x) sont nuls seulement si S'(x) est un multiple du polynôme générateur G(x), donc en particulier lorsque S'(x)=S(x).

Trois traitement sont possibles:

1—le mot code reçu est correct c'est-à-dire:

—octet "17"=NUL,

—aucun octet n'est d'une erreur de parité, 1PF="0",

—R'(x)="0",

la numérotation des mots codes reçus est mise à jour dnas NUMMOT2 et l'autorisation d'exploitation des octets "13 à "15" est donnée à UGT.

2—le processus de correction est engagé si:

—octet "17"=NUL,

—un seul parmi les octets "1" à "16" est affecté d'un erreur de parité,

1PF="1" et 2PF="0",

—R'(x) est différent de NUL,

le rang de l'élément binaire erroné dans la suite S' des coefficients du polynôme S'(x) est donné par la valeur de l'indice *p*, telle que $x^p=R'(x)$, modulo G(x),

toutefois, si cet élément binaire n'appartient pas à l'octet dont la parité est mauvaise et dont l'identité est notée dans ADRPF, la correction n'est pas effectuée et une demande de répétition est envoyée par UGT.

3—dans les autres cas, une demande de répétition est effectuée et les cas particuliers suivant peuvent alors de produire:

a) la demande de répétition n'a pas été reconnue par UGC,

b) la transmission de la séquence de resynchronisation a été perturbée et cette dernière n'a pas été reconnue dans le récepteur REC,

c) le numéro du mot code inclus dans la séquence de resynchronisation ne correspond pas au numéro du mot code dont la répétition a été demandée.

Les cas a) et b) sont traités par renouvellement de la demande de répétition lorsqu'environ 1 120 ms après le début d'émission la réception des deux premiers octets SYN n'a toujours pas été détectée. L'UGT comporte à cet effect une base de temps appropriée.

Dans le cas c), le renouvellement de la demande de répétition s'effectue aussitôt.

Domain répétable

La notion de domain répétable a été mentionnée plus haut dans la description du fonctionnement du générateur GEN en cas de demande de répétition. On appelle domaine répétable l'ensemble des mots codes encore présents dans la mémoire MS et qui ont été émis entièrement, c'est-à-dire pour lesquels l'élément binaire DOR est à "1". Ce domaine comprend au plus quinze mots codes.

Les différents cas pouvant se présenter sont les suivants:

—le domain répétable est vide,

i) s'il y a un mot code en cours d'envoi, cet envoi est interrompu dès la réception du caractère NAK, le générateur GEN envoie la séquence de resynchronisation, avec comme numéro de mot, celui du mot dont l'envoi a été interrompu et reprend à son début l'envoi de ce mot code,

ii) si aucun mot code n'est en cours d'émission, mais s'il existe un mot code à émettre, GEN envoie la séquence de resynchronisation avec comme numéro de mot, celui du mot à émettre et commence la transmission de ce dernier,

iii) si aucun mot code n'est en cours de transmission et s'il n'existe pas de mot code à émettre, UGC grade en mémoire la demande de répétition et la traitera comme mentionné ci-dessous en ii) du cas du domaine répétable non vide,

—le domaine répétable n'est pas vide,

i) le mot code dont la répétition est demandée appartient au domaine répétable,

si un mot code est en cours d'envoi, celui-ci est interrompu dès réception du caractère NAK et GEN envoie la séquence de resynchronisation, puis reprend l'envoi des mots codes à partir de celui dont la répétition a été demandée,

ii) le mot code dont la répétition est demandée n'appartient pas au domain répétable,

si l'envoi d'un mot code est en cours, celui-ci est interrompu dès réception du caractère NAK et GEN envoie la séquence de resynchronisation avec, comme numéro de mot code, celui du mot dont l'envoi a été interrompu, puis reprend au début l'envoi de ce dernier,

si aucun envoi n'est en cours, le traitement s'effectue comme mentionné en ii) et iii) du cas du domaine répétable vide.

Dans la pratique, les circuits composants du générateur GEN et du récepteur REC, c'est-à-dire les registres, les mémoires et les circuits de calcul arithmétique et logique peuvent être directement constitués par des composants des microprocesseurs des unités de gestion UGC, et UGT, et leurs séquenceurs et circuits de sélection réalisés sous la forme de logiciels de ces microprocesseurs.

## Revendications

1. Système de transmission asynchrone, en particulier pour systèmes de vidéotex interactifs, dans lequel les données sont d'abord groupées en octets qui sont transmis par un modem qui ajoute à chaque octet les moments de départ (START) et de fin (STOP), dans lequel on utilise par octet un bit de parité et la méthode à retransmission continue du type ARQ-NAK, les octets à transmettre étant groupés par blocs ou mots codes accompagnés chacun d'une séquence de contrôle, caractérisé en ce que chaque mot code a une longueur fixe comportant dix-sept octets dont les octets "1" à "15" contiennent des données utiles codées sur sept bits b1 à b7, le 8<sup>e</sup> bit b8 de chaque octet étant le bit de parité, dont le 16<sup>e</sup> octet contient la séquence de contrôle du mot code et dont le 17<sup>e</sup> octet est un octet de validation dont les huit bits sont égaux à "0", si l'état de repos du système de transmission correspond à un état "1", ou vice versa, un tel octet étant interdit comme premier octet d'un mot code.

2. Système suivant la revendication 1, caractérisé en ce que les bits de parité des quinze premiers octets d'un mot code et la séquence de contrôle du 16<sup>e</sup> octet sont utilisés pour corriger directement des erreurs isolées.

3. Système selon la revendication 1 ou 2, caractérisé en ce qu'à la station centrale (S), il est prévu, entre la source d'information et le modem (Y1), un générateur de mots codes (GEN) comprenant un générateur de parité (GP) commutable en service ou non dont la sortie est reliée à l'entrée d'un premier registre d'entrée (EMIS) décalable à droite et à gauche dont la sortie est reliée à l'opérande A d'un premier circuit arithmétique et logique (CAL1) dont l'entrée d'opérande B est sélectivement reliable à un premier registre de mémoire de coefficients de polynôme générateur (GDEX1) et à un premier registre d'emmagasinage de reste intermédiaire de division polynômiale (RDEX1) et dont la sortie F est reliée à l'entrée d'un premier registre tampon (R1) dont la sortie est sélectivement reliable à l'entrée du premier registre d'entrée (EMIS), à l'entrée du premier registre d'emmagasinage (RDEX1) et à l'entrée d'une première mémoire (MS) arrangée en blocs d'octets addressables en écriture par des premiers pointeurs d'écriture de blocs (NMOTR1) et d'octets (NOCTR1), et adressable en lecture par des pointeurs de lecture de blocs (NMOTE) et d'octets (NOCTE), l'entrée du générateur de parité (GP) étant reliée à l'entrée de données du générateur (GEN) et la sortie de la mémoire étant reliée à la sortie du générateur (GEN), lequel comprend encore un premier séquenceur (SQ1), un premier circuit de sélection (SLS) d'adressage des autre circuits, un premier compteur de boucle de divison polynömiale, un premier registre d'octet nul (NUL2) dont la sorte est reliable à la sortie du générateur.

4. Système suivant la revendication 3, caractérisé en ce que la source d'information comporte une première unité de gestion à microprocesseur qui est relié par ses bus de données (BUS SD), d'adressage (BUS SA) et de commande (BUS SC) au générateur (GEN).

5. Système suivant la revendication 3 ou 4, caractérisé en ce qu'à la première mémoire, est associée une mémoire auxiliaire (MS') adressable en écriture et en lecture par les pointeurs de blocs de la première mémoire, chaque bloc de la mémoire auxiliaire comprenant deux éléments binaires dont le premier est mis à "1" pour chaque mot code, le 17<sup>e</sup> octet exclus, complètement écrit dans la première mémoire et étant mis à "0" tandis que le second est mis à "1" pour chaque lecture complète d'un mot code.

6. Système suivant l'une des revendications 3 à 5, caractérisé en ce que le pointeur de lecture de blocs (NMOTE) de la première mémoire est sélectivement reliable à la sortie du générateur (GEN).

7. Système suivant l'une des revendications 3 à 6, caractérisé en ce que le générateur comprend encore un quantrième registre (X) dont l'entrée est reliée à l'entrée de données du générateur et dont la sortie est reliée à l'entrée d'adressage de lecture de la mémoire intermédiaire (MS'), d'une part, et à l'entrée de chargement du pointeur de lecture de blocs (NMOTE).

8. Système suivant l'une des revendications 1 à 7, caractérisé en ce que, dans le terminal de l'abonné utilisateur, il est prévu entre la partie réception du modem (Y2) et l'unité de gestion (T) du terminal, un récepteur (REC) de mots codes comprenant un détecteur d'erreur de parité (EP), un second registre d'entrée (REG) décalable à droite et à gauche dont la sortie est reliée à l'opérande A d'un second circuit arithmétique et logique (CAL2) dont l'entrée d'opérande B est sélectivement reliable à un second registre de mémoire de coefficients de polynôme générateur (GDEX2), à un second registre d'emmagasinage de reste intermédiaire de division polynômiale (RDEX2), et à la sortie d'un registre de mémoire de masque (MASQ) décalable à gauche, et dont la sortie F est reliée à l'entrée d'un second régistre tampon (R2) dont la sortie est sélectivement reliable à l'entrée du second registre d'entré (REG), à l'entrée du second registre d'emmagasinage (RDEX2) et à l'entrée d'une seconde mémoire d'un bloc d'octets (MT) adressable en écriture et en lecture par un pointeur d'octets (NOCT), l'entrée du second registre d'entrée étant reliée à l'entrée du récepteur et la sortie de la mémoire étant reliée à la sortie du récepteur, lequel comprend encore un second séquenceur (SQ2), un second compteur de boucle de division polynômiale (COMPT2), un second circuit d'adressage des autres circuits (SLT), un registre auxiliaire décalable à gauche (XP/NM) dont l'entrée est sélectivement reliable à la sortie du second registre tampon (R2) et dont la sortie est sélectivement reliable à l'entrée d'opérande du second circuit arithmétique et logique (CAL2) et à la sortie du récepteur, un registre de mémoire d'indication d'erreur (ADRPF) dont l'entrée de données est reliée à la sortie du pointeur d'octets (NOCT) et l'entrée de commande est reliée à la sortie du circuit détecteur d'erreur de parité (EP), et un comparateur (COMPA) dont une entrée est reliées à la sortie du pointeur d'octets (NOCT) et l'autre entrée à la sortie du registre de mémoire d'indication d'erreur (ADRPF) et dont la sortie est reliée au second séquenceur (SQ2).

9. Système suivant la revendication 8, caractérisé en ce que le terminal comprend encore une second unité de gestion à microprocesseur qui est relié par ses bus de données (BUS TD), d'adressage (BUS TA) et de commande (BUS TC) au récepteur.

10. Système suivant la revendication 8 ou 9, caractérisé en ce que le terminal comprend encore un compteur de mots codes reçus (NUMMOT2) qui est sélectivement reliable à l'entrée d'opérande B du second circuit arithmétique et logique (CAL2).

11. Système suivant l'une des revendications précédentes, caractérisé en ce que, dans le station émission, un compteur de mots codes envoyés et, dans le termianl, un compteur de mots codes reçus fonctionnant en synchronisme, sont prévus pour l'identification des mots codes.

**Patentansprüche**

1. Asynchrones Übertragungssystem, insbesondere für interaktives Videotexsystem, bei dem Daten zunächst in Bytes gruppiert werden, die über ein Modem übertragen werden, das jedem Byte den START-Impuls und den STOP-Impuls hinzufügt, wobei ein Parity-Bit je Byte und das kontinuierliche Weiterübertragungsverfahren vom Typ ARQ-NAK verwendet werden und die zu übertragenden Bytes in Blöcken oder Codewörtern gruppiert werden, denen je eine Prüffolge zugeordnet ist, dadurch gekennzeichnet, daß jedes Codewort eine feste Länge mit siebzehn Bytes aufweist, von denen die Bytes "1—15" die übertragenen Nutzdaten enthalten, die mit sieben Bits b1—b7 codiert sind, wobei das 8te Bit b8 jedes Bytes das Parity-Bit ist, daß das 16te Byte das Prüffolge-Byte des Codewortes ist, daß das 17te Byte das Freigabebyte des Codewortes ist, daß die acht Bits des Freigabebytes gleich "0" sind, wenn der Ruhezustand des Übertragungssystems "1" entspricht, oder ungekhert, wobei ein derartiges Byte daran gehindert ist, das erste Byte eines Codewortes zu sein.

2. System nach Anspruch 1, dadurch gekennzeichnet, daß Parity-Bits der fünfzehn Bytes eines Codewortes und das sechzehnte Byte der Prüffolge dazu benutzt werden, direkt einzelne Fehler zu korrigieren.

3. System nach Anspruch 1 oder 2, dadurch gekennzeichnet, daß an der Zentralstation (S) zwischen der Datenquelle und dem Modem (Y1) ein Codewort-Generator (GEN) vorgesehen ist, der einen ein- und ausschaltbaren Parity-Generator (GP) enthält und dessen Ausgang mit dem Eingang eines ersten Eingangs-Schieberegisters (EMIS) verbunden ist, dessen Schieberichtung nach rechts oder nach links gerichtet sein kann und dessen Ausgang mit dem Operanden A einer ersten arithmetischen und logischen Schaltung (CAL1) verbunden ist, dessen Operandeingang B selektiv an ein erstes Speicherregister (GDEX1), das die Koeffizienten eines Polynom-Generators speichert, und an ein erstes Speicheregister anschaltbar ist, das den Zwischenübertrag der Polynom-Division (RDEX1) speichert, daß die logische und arithmetische Schaltung einen Ausgang F aufweist, der mit dem Eingang eines ersten Pufferregisters (R1) verbunden ist, dessen Ausgang selektiv an den Eingang des ersten Eingangs-Schieberregisters (EMIS), an den Eingang des ersten Speicherregisters (RDEX1) und an den Eingang eines ersten Speichers (MS) für die Speicherung der Byte-Blöcke anschaltbar ist, die in der Schreibbedingung von dem ersten Block-Schreib-Zeiger (pointer) (NMOTR1) und in der Lesebedingung durch den Block-Lese-Zeiger (NMOTE) und durch den Byte-Lese-Zeiger (NOCTE) adressierbar ist, daß der Eingang des Parity-Generators (GP) mit dem Dateneingang des Codewort-Generators (GEN) verbunden ist und daß der Ausgang des ersten Speichers mit dem Ausgang des Codewort-Generators (GEN) verbunden ist, der außerdem eine erste Folgeschaltung (SQ1), eine erste Adress-Auswählschaltung (SLS) für die Adressierung anderer Schaltungen, einen ersten Polynom-Divisions-Schleifenzähler und einen ersten Null-Byte-Speicher (NUL2) aufweist, der mit seinem Ausgang selektiv mit dem Ausgang des Codewort-Generators verbunden ist.

4. System nach Anspruch 3, dadurch gekennzeichnet, daß die Datenquelle eine erste Steuereinheit mit einem Mikroprozessor enthält, der über den Datenbus (BUS DS), den Adress-Bus (BUS SC) und den Steuer-Bus (BUS SC) mit dem Generator (GEN) gekoppelt ist.

5. System nach Anspruch 3 oder 4, dadurch gekennzeichnet, daß ein Hilfs-Speicher (MS') dem ersten Speicher zugeordnet ist, daß der Hilfs-Speicher (MS') in Schreibbedingung und in Lesebedingung entsprechend den Block-Zeigern des ersten Speichers adressierbar ist, daß jeder Block des Hilfs-Speichers zwei Bits aufweist, von denen das erste für jedes Codewort auf "1" gesetzt wird, mit Ausnahme des 17ten Byte, wenn das genannte Codewort vollständig in den ersten Speicher eingelesen ist, daß das genannte Bit auf "0" gesetzt wird, während das zweite Bit jedesmal dann auf "1" gesetzt wird, wenn ein Codewort vollständig aus dem ersten Speicher gelesen ist.

6. System nach einem der Ansprüche 3—5, dadurch gekennzeichnet, daß der Ausgang des Codewort-Generators (GEN) selektiv mit dem Block-Lese-Zeiger (pointer) (NMOTE) des ersten Speichers koppelbar ist.

7. System nach einem der Ansprüche 3—6, dadurch gekennzeichnet, daß der Code-Generator außerdem ein viertes Register (X) aufweist, von dem ein Eingang mit dem Dateneingang des Codewort-Generators und ein Ausgang einerseits mit dem Lese-Adress-Eingang des Hilfsspeichers (MS') und mit dem Last-Eingang des Block-Lese-Zeigers (NMOTE) verbunden ist.

8. System nach einem der Ansprüche 1—7, dadurch gekennzeichnet, daß in dem Teilnehmer-Terminal zwischen dem Modem-Empfangsteil (Y2) und der Terminal-Steuereinheit (T) ein Codewort-Empfänger (REC) mit einem Parity-Fehlerdetektor (EP) und ein zweites Eingangs-Schieberegister (REG) vorgesehen sind, das sowohl eine Verschiebung in Richtung nach rechts und nach links ermöglicht und von dem ein Ausgang mit dem Operanden A einer zweiten logischen und arithmetischen Schaltung (CAL2) verbunden ist, dessen Operand B selektiv mit einem zweiten Speicherregister (GEDX2) für die Speicherung der Polynom-Generatorkoeffizienten, mit einem zweiten Speicherregister (RDEX2) für die Speicherung des Zwischenübertrages der Polynom-Division und mit dem Ausgang eines nach links schiebbaren Masken-Speicherregisters (MASQ) verbunden ist, und von dem ein Ausgang F mit einem zweiten Pufferregister (R2) verbunden ist, dessen Ausgang selektiv mit dem Eingang eines zweiten Eingangs-Registers (REG), mit dem Eingang eines zweiten Speicherregisters (RDEX2) und mit dem Eingang eines zweiten Byte-Block-Speichers (MT) verbunden ist, der in Schreib- und Lesebedingung von einem Byte-Zeiger (NOCT) adressierbar ist, daß der Eingang des zweiten Eingangs-Registers mit dem Ausgang des Empfängers verbunden ist, der außerdem einen zweiten Sortierer (SQ2), einen zweiten Polynom-Divisions-Schleifenzähler (COMPT2), eine zweite Adress-Auswahlschaltung (SLT) für die Adressierung der anderen Schaltungen und ein nach links schiebbares Hilfsregister (XT/NM) aufweist, von dem ein Eingang selektiv mit dem Ausgang des zweiten Pufferregisters (R2) und ein Ausgang selektiv mit dem Operanden-Eingang der zweiten logischen und arithmetischen Schaltung (CAL2) und dem Ausgang des Codewort-Empfängers verbunden ist, daß ein Fehler anzeigendes Speicherregister (ADRPF) mit einem Dateneingang mit dem Ausgang des Byte-Zeigers (NOCT) und mit einem Steuereingang mit dem Ausgang des Parity-Fehlerdetektors (EP) verbunden ist, und daß ein Comparator (COMPA) mit einem Eingang mit dem Ausgang des Byte-Zeigers (NOCT), mit einem anderen Eingang mit einem Ausgang des Fehler anzeigenden Speicherregisters (ADRTS) und mit seinem Ausgang mit dem zweiten Sortierer (SQ2) verbunden ist.

9. System nach Anspruch 8, dadurch gekennzeichnet, daß das Teilnehmer-Terminal außerdem eine zweite Steuereinheit mit einem Mikroprozessor aufweist, der über einen Daten-Bus (BUS TD), einen Adress-Bus (BUS TA) und einen Steuer-Bus (BUS TC) mit dem Codewort-Empfänger verbunden ist.

10. System nach Anspruch 8 oder 9, dadurch gekennzeichnet, daß das Teilnehmer-Terminal außerdem einen Zähler (NUMMOT2) für die empfangenen Codewörter aufweist, der selektiv mit dem Eingang für den Operanden B der zweiten logischen und arithmetischen Schaltung (CAL2) verbunden ist.

11. System nach einem der vorangehenden Ansprüche, dadurch gekennzeichnet, daß in der Übertragungsstation ein Zähler für die übertragenen Codewörter und in dem Teilnehmer-Terminal ein Zähler für die empfangenen Codewörter vorgesehen ist, wobei beide Zähler für die Identifizierung des Codewortes in Synchronismus arbeiten.

**Claims**

1. An asynchronous transmission system, particularly for a videotext interactive system, wherein data are first grouped into bytes which are transmitted through a modem which adds to each byte the START pulse and the STOP pulse, and there is used a parity bit per byte and the continuous ARQ-NAK type retransmission method, the bytes to be transmitted being grouped into blocks or code words each accompanied with a check sequence, characterized in that each code word has a fixed length comprising seventeen bytes among which bytes "1—15" include the useful transmitted data that has been encoded with seven bits b1—b7, the 8th bit b8 of each byte being the parity bit, the 16th byte being the check sequence byte of the code word, and the 17th byte being the enabling byte of the code word, the eight bits of the enabling byte being equal to "0", if the rest state of the transmission system corresponds to "1", or vice-versa, such a byte being prohibited as the first byte of a code word.

2. A system according to claim 1, characterized in that parity bits of the fifteen bytes of a word code and the sixteenth check sequence byte are used to directly correct isolated errors.

3. A system according to claims 1 or 2, characterized in that there is provided at the central station (S) between the data source and the modem (Y1), a code word generator (GEN) including a parity generator (GP) switchable on or off and whose output is connected to the input of a first input shift register (EMIS) that is shiftable either rightward or leftward and the output of which is connected to the operand A of a first arithmetic and logical circuit (CAL1) the operand B input of which being selectively switchable to a first memory register (GDEX1) storing the coefficients of a polynomial generator and to a first store register for storing an intermediate remainder of the polynomial division (RDEX1), the logical and arithmetic circuit having an output F connected to the input of a first buffer register (R1) whose output is selectively switchable to the input of the first input shift register (EMIS), to the input of the first storing register (RDEX1) and to the input of a first memory (MS) arranged to store byte blocks that are addressable in write condition from first block write pointers (NMOTR1) and addressable in read condition by block read pointers (NMOTE) and byte read pointers (NOCTE), the input of the parity generator (GP) being connected to a data input of the code word generator (GEN) and the output of the first memory being connected to the output of the code word generator (GEN), which also includes a first sequencing circuit (SQ1), a first address selection circuit (SLS) for addressing other circuits, a first polynomial division loop counter, and a first nill byte register (NUL2) having an output selectively connected to the output of the code generator.

4. A system according to claim 3, characterized in that the data source comprises a first control unit including a microprocessor coupled through data bus (BUS SD), address bus (BUS SC) and control bus (BUS SC) to the generator (GEN).

5. A system according to claim 3 or 4, characterized in that a subsidiary memory (MS') is associated with the first memory, said subsidiary memory (MS') being addressable in write and read conditions responsive to the block pointers of the first memory, each block of the subsidiary memory comprising two bits, the first one being set to "1" for each code word, save the 17$^{e}$ byte, when said code word has been entirely written into the first memory, the said bit being reset to "0" while the second bit is set to "1" each time a code word has been entirely read out from the first memory.

6. A system according to any of claims 3—5, characterized in that the output of the code word generator (GEN) may be selectively coupled to the read block pointer (NMOTE) of the first memory.

7. A system according to any of the claims 3—6, characterized in that the code generator further comprises a fourth register (X) having an input connected to the data input of the code word generator and having an output connected to the read addressing input of the subsidiary memory (MS'), on the one hand, and to the load input of the read block pointer (NMOTE).

8. A system according any of the claims 1—7, characterized in that, in subscriber's terminal, between the modem reception part (Y2) and the terminal control unit (T), there is provided a code word receiver (REC) comprising a parity error detector (EP), a second input shift register (REG) that is shiftable either rightward or leftward and has an output connected to the operand A of a second logicial and arithmetic circiut (CAL2) whose operand B input is selectively coupled to a second memory register (GEDX2) storing the polynomial generator coefficients, to a second storing register (RDEX2) storing the intermediate remainder of the polynomial division, and to the output of a leftward shiftable mask memory register (MASQ) and an output F that is connected to a second buffer register (R2) whose output is selectively coupled to the input of a second input register (REG), to the input of a second store register (RDEX2) and to the input of a second byte block memory (MT) that may be adressed in write and read conditions from a byte pointer (NOCT), the input of the second input register being coupled from the output of the receiver which further includes a second sequencer (SQ2), a second polynomial division loop counter (COMPT2), a second addressing selection circuit (SLT) for addressing the other circuits, a leftward shiftable subsidiary register (XP/NM) having an input selectively connected from the output of the second buffer register (R2) and an output selectively connected to an operand input of the second logical and arithmetic circuit (CAL2) and to the output of the code word receiver, an error indicating memory register (ADRPF) having data input which is connected from the output of the byte pointer (NOCT) and the control input is connected from the output of the parity error detector (EP), and a comparator (COMPA) with one input connected from the output of the byte pointer (NOCT) and another input connected from an output of the error indicating memory register (ADRPF) and with the output connected to the second sequencer (SQ2).

9. A system according to claim 8, characterized in that the subscriber's terminal further comprises a second control unit with a microprocessor that is connected to the code word receiver via data bus (BUS TD), address bus (BUS TA) and control bus (BUS TC).

10. A system according to claim 8 or 9, characterized in that the subscriber's terminal further comprises a received code word counter (NUMMOT2) which is selectively connected to the operand B input of the second logical and arithmetic circuit (CAL2).

11. A system according to any of the preceding claims, characterized in that, in the transmission station, there is provided a transmitted code word counter and, in the subscriber's terminal, there is provided a received code word counter, both the counters operating in synchronism for identifying the code word.

FIG.1

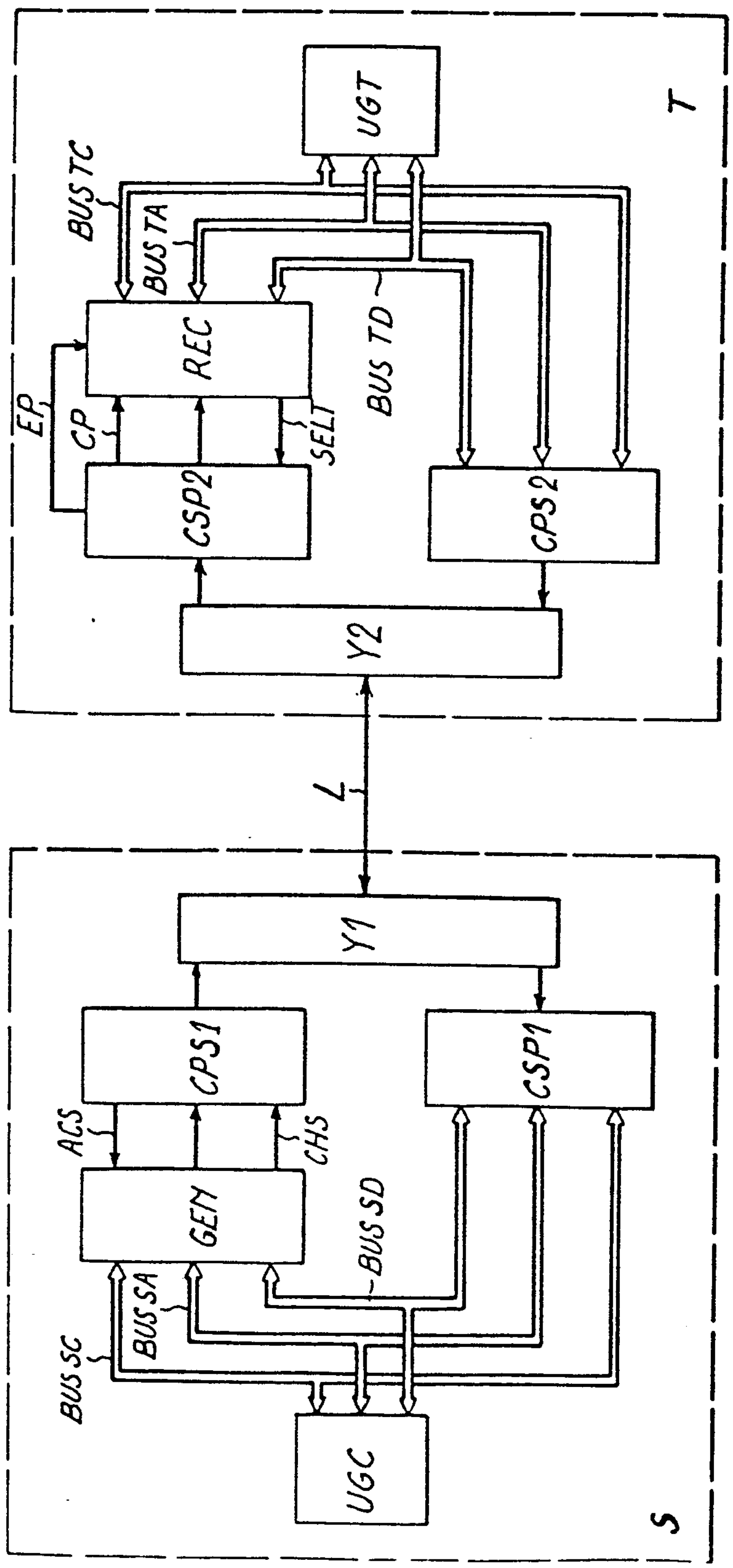
T
UGT
BUS TC
BUS TA
BUS TD
REC
EP
CP
SELT
CSP2
CPS2
Y2
L
Y1
CPS1
CSP1
ACS
CHS
GEN
BUS SD
BUS SA
BUS SC
UGC
S

FIG.2

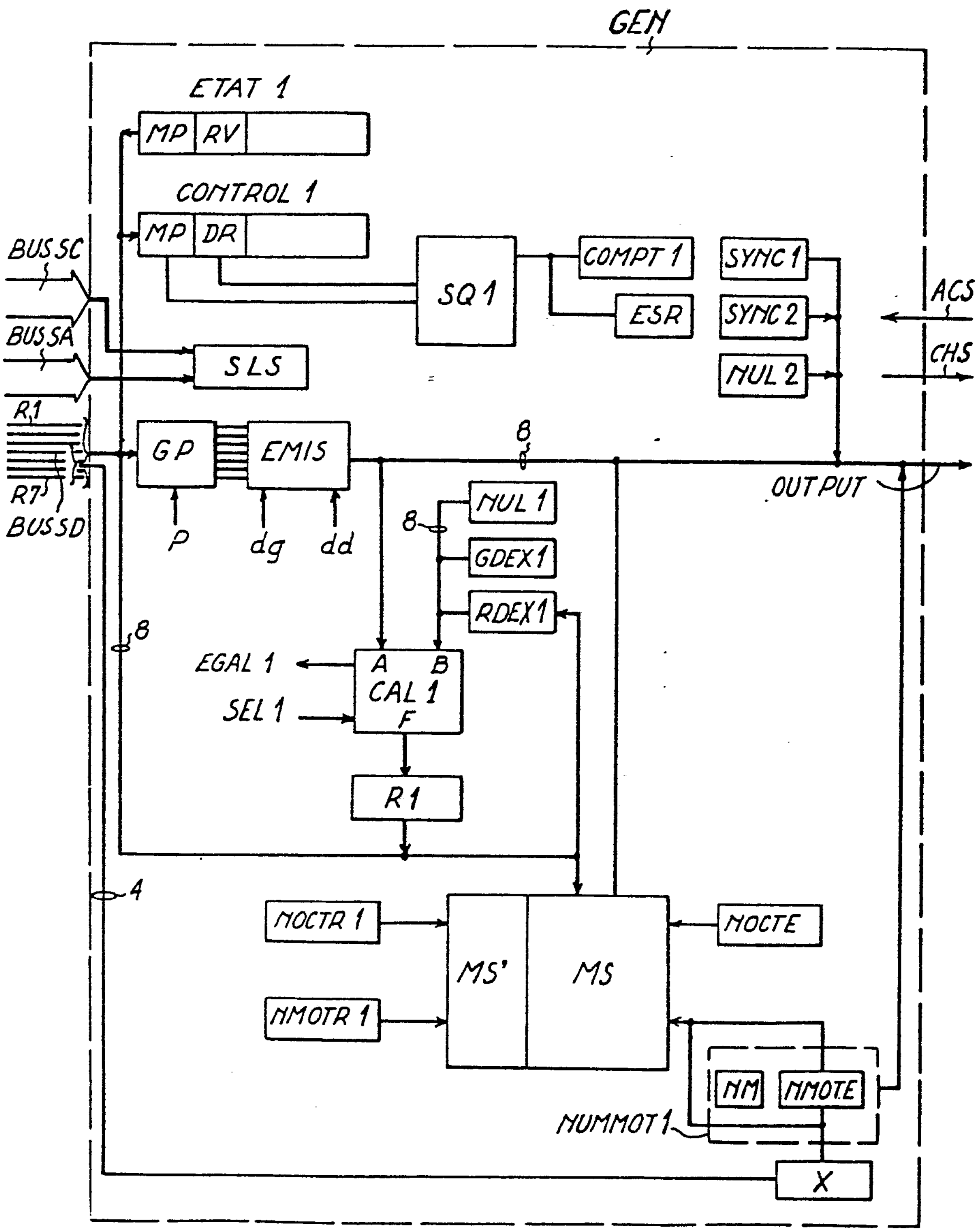
GEN
ETAT 1
MP
RV
CONTROL 1
MP
DR
SQ 1
COMPT 1
ESR
SYNC 1
SYNC 2
NUL 2
ACS
CHS
BUS SC
BUS SA
SLS
R1
R7
BUS SD
GP
EMIS
8
P
dg
dd
OUTPUT
NUL 1
8
GDEX 1
RDEX 1
8
EGAL 1
SEL 1
A
B
CAL 1
F
R1
4
NOCTR 1
NMOTR 1
MS'
MS
NOCTE
NM
NMOTE
NUMMOT 1
X

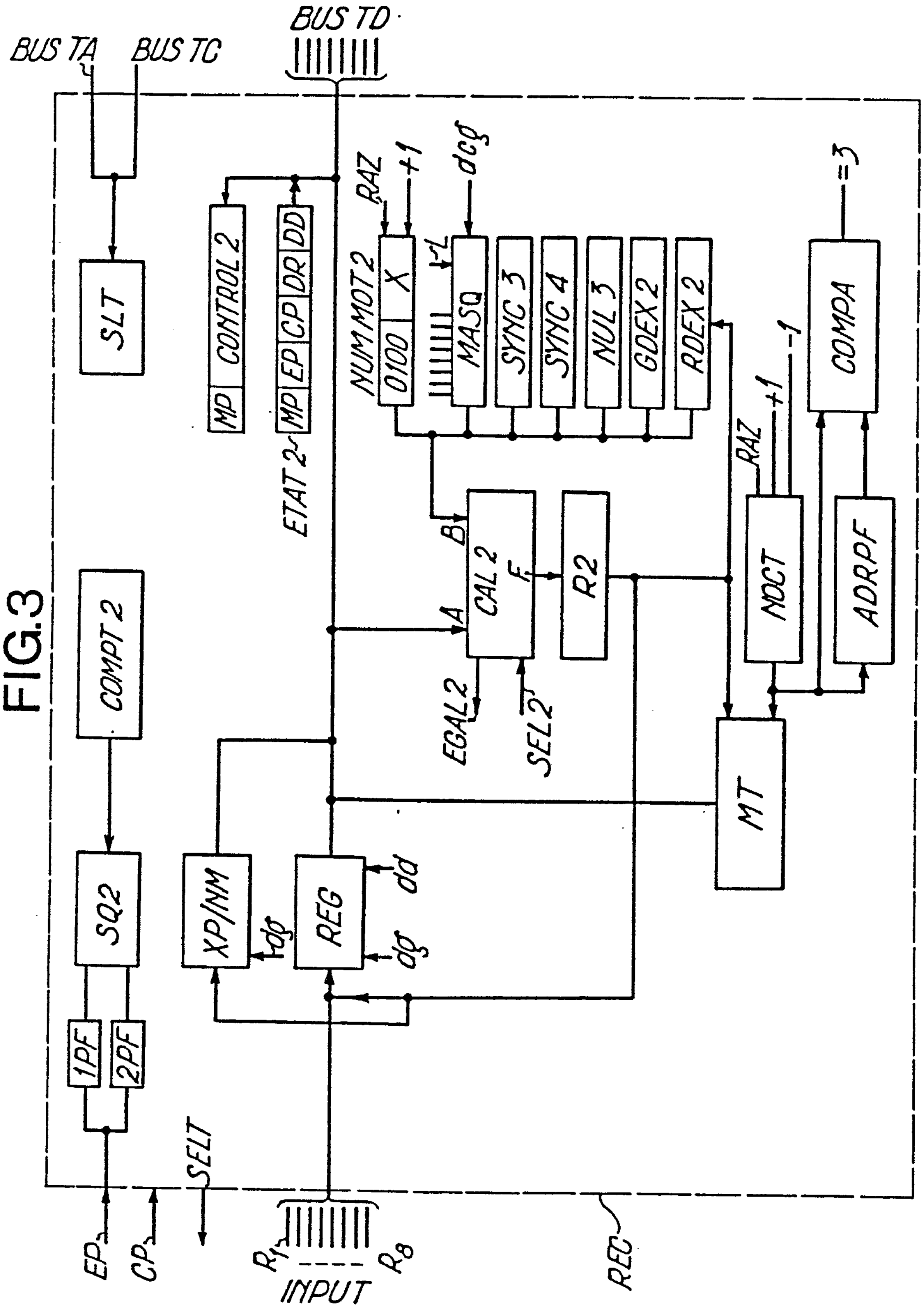

BUS TA
BUS TC
BUS TD
SLT
CONTROL 2
MP
MP
EP
CP
DR
DD
ETAT 2
NUM MOT 2
0100
X
RAZ
+1
dcφ
r-L
MASQ
SYNC 3
SYNC 4
NUL 3
GDEX 2
RDEX 2
=3
COMPA
RAZ
+1
-1
NOCT
ADRPF
CAL 2
A
B
F
R2
EGAL 2
SEL 2
COMPT 2
SQ2
1PF
2PF
XP/NM
dφ
REG
dd
dφ
MT
SELT
EP
CP
R1
R8
INPUT
REC


FIG.3

FIG.4a

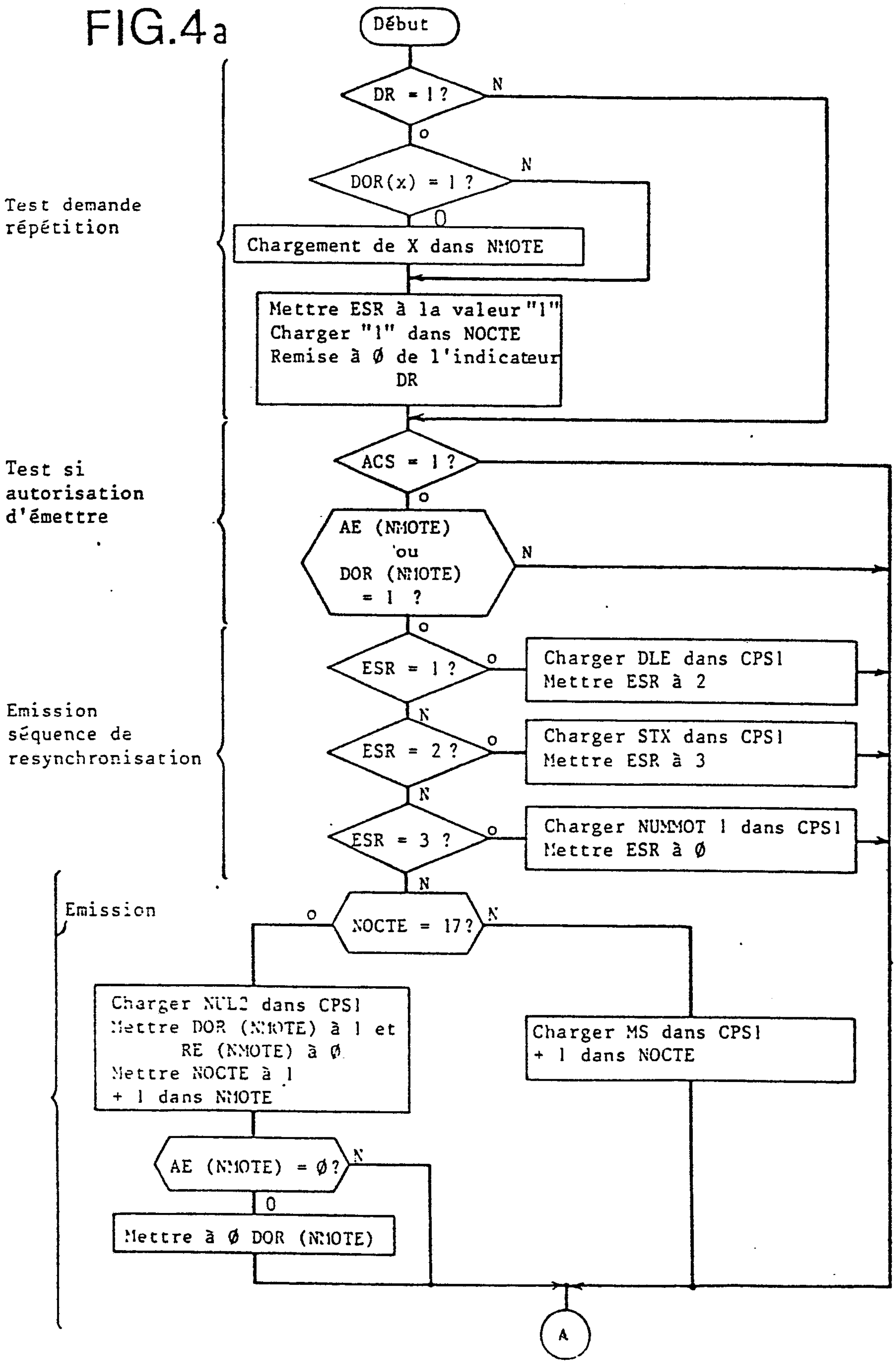

Début
DR = 1 ?
N
o
DOR(x) = 1 ?
N
0
Test demande répétition
Chargement de X dans NMOTE
Mettre ESR à la valeur "1"
Charger "1" dans NOCTE
Remise à Ø de l'indicateur DR
Test si autorisation d'émettre
ACS = 1 ?
o
AE (NMOTE) ou DOR (NMOTE) = 1 ?
N
o
Emission séquence de resynchronisation
ESR = 1 ?
o
Charger DLE dans CPS1
Mettre ESR à 2
N
ESR = 2 ?
o
Charger STX dans CPS1
Mettre ESR à 3
N
ESR = 3 ?
o
Charger NUMMOT 1 dans CPS1
Mettre ESR à Ø
N
Emission
o
NOCTE = 17 ?
N
Charger NUL2 dans CPS1
Mettre DOR (NMOTE) à 1 et RE (NMOTE) à Ø
Mettre NOCTE à 1
+ 1 dans NMOTE
Charger MS dans CPS1
+ 1 dans NOCTE
AE (NMOTE) = Ø ?
N
0
Mettre à Ø DOR (NMOTE)
A

FIG.4b

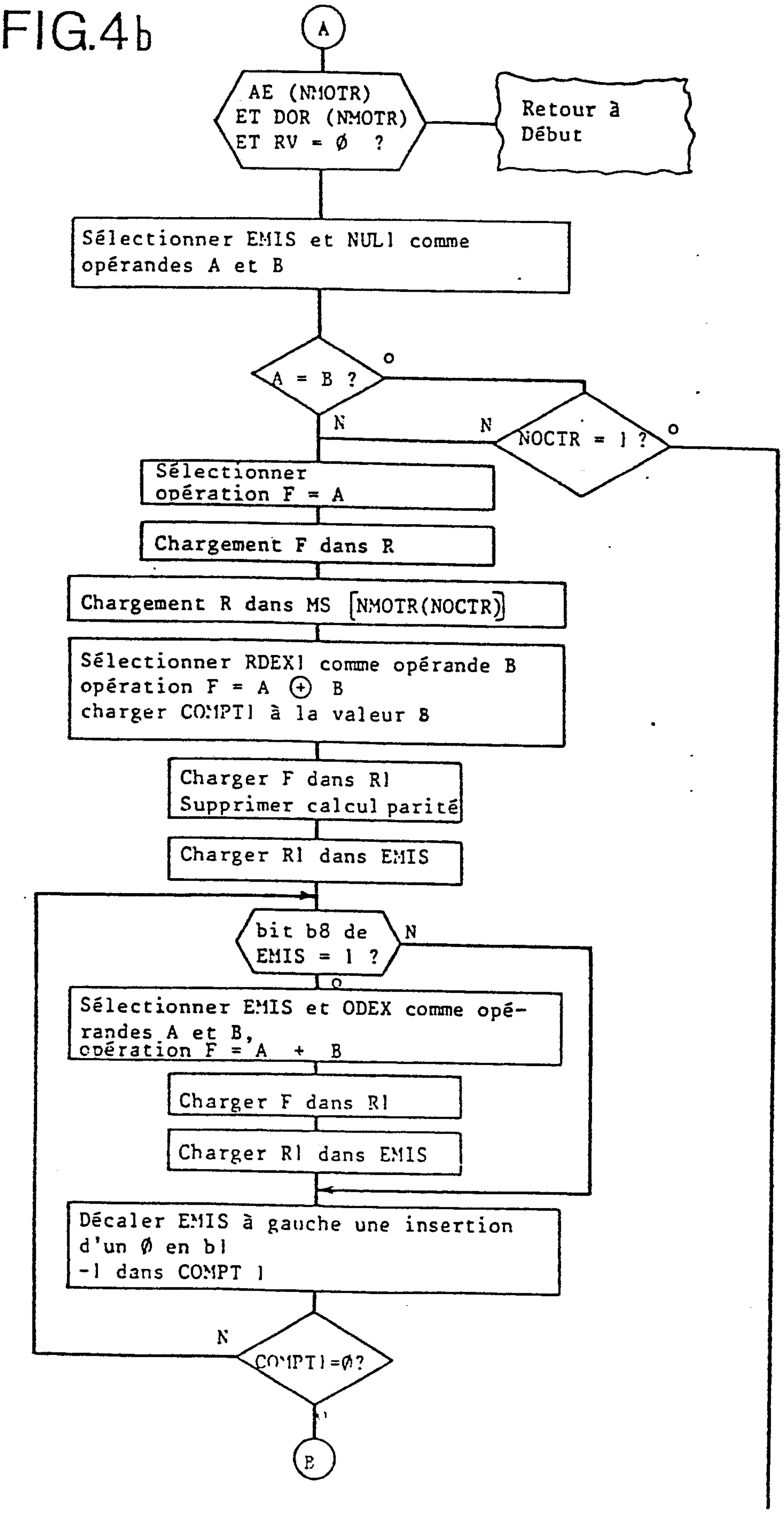
A
AE (NMOTR)
ET DOR (NMOTR)
ET RV = Ø ?
Retour à
Début
Sélectionner EMIS et NUL1 comme
opérandes A et B
A = B ?
O
N
N
NOCTR = 1 ?
O
Sélectionner
opération F = A
Chargement F dans R
Chargement R dans MS [NMOTR(NOCTR)]
Sélectionner RDEX1 comme opérande B
opération F = A ⊕ B
charger COMPT1 à la valeur 8
Charger F dans R1
Supprimer calcul parité
Charger R1 dans EMIS
bit b8 de
EMIS = 1 ?
N
O
Sélectionner EMIS et ODEX comme opé-
randes A et B,
opération F = A + B
Charger F dans R1
Charger R1 dans EMIS
Décaler EMIS à gauche une insertion
d'un Ø en b1
-1 dans COMPT 1
N
COMPT1=Ø?
B

FIG.4c

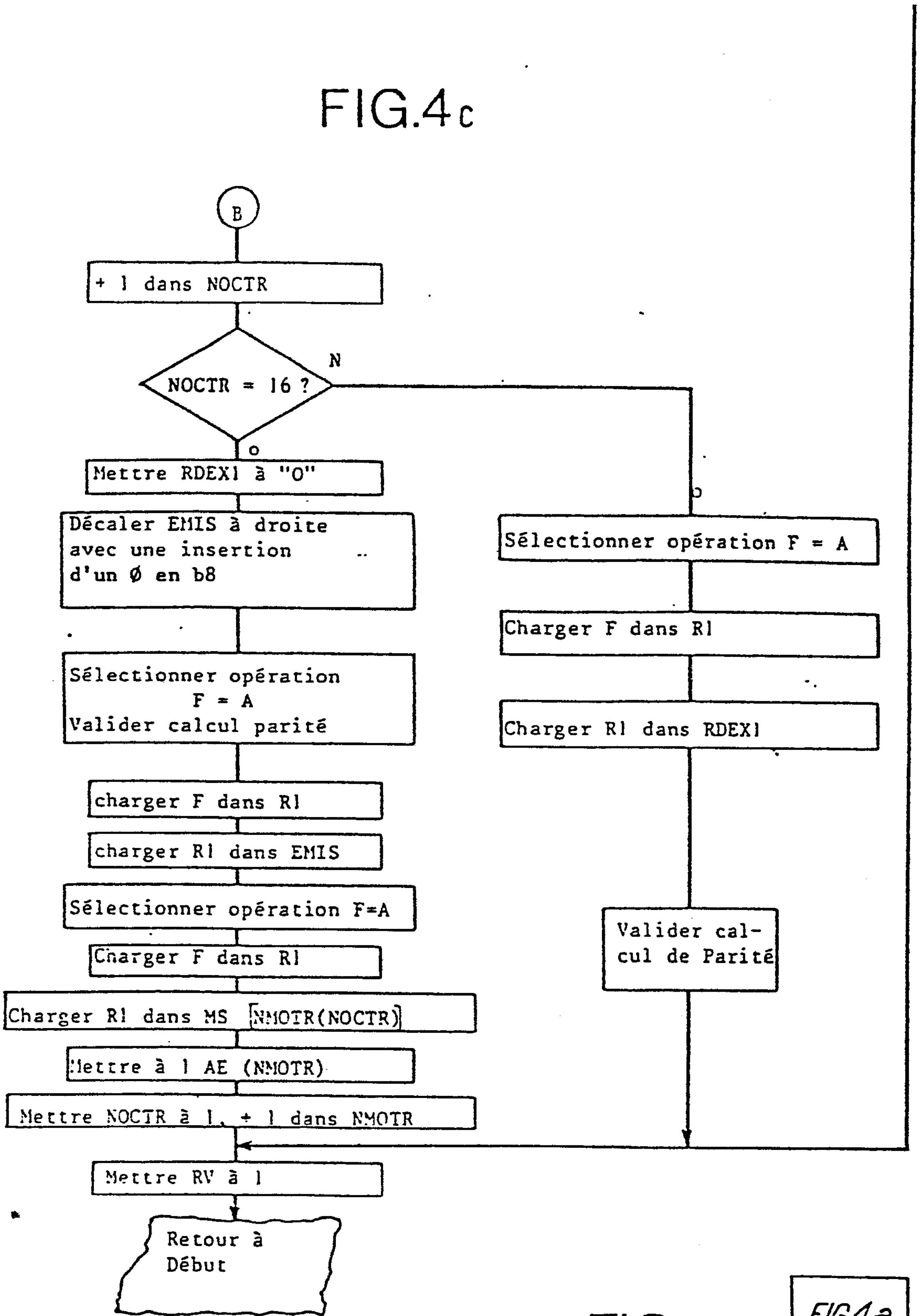
B
+ 1 dans NOCTR
NOCTR = 16 ?
N
O
Mettre RDEX1 à "O"
Décaler EMIS à droite avec une insertion d'un Ø en b8
Sélectionner opération F = A Valider calcul parité
charger F dans R1
charger R1 dans EMIS
Sélectionner opération F=A
Charger F dans R1
Charger R1 dans MS NMOTR(NOCTR)
Mettre à 1 AE (NMOTR)
Mettre NOCTR à 1, + 1 dans NMOTR
Sélectionner opération F = A
Charger F dans R1
Charger R1 dans RDEX1
Valider calcul de Parité
Mettre RV à 1
Retour à Début

FIG.4d

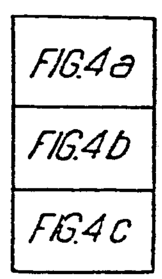
FIG.4a
FIG.4b
FIG.4c

FIG.5

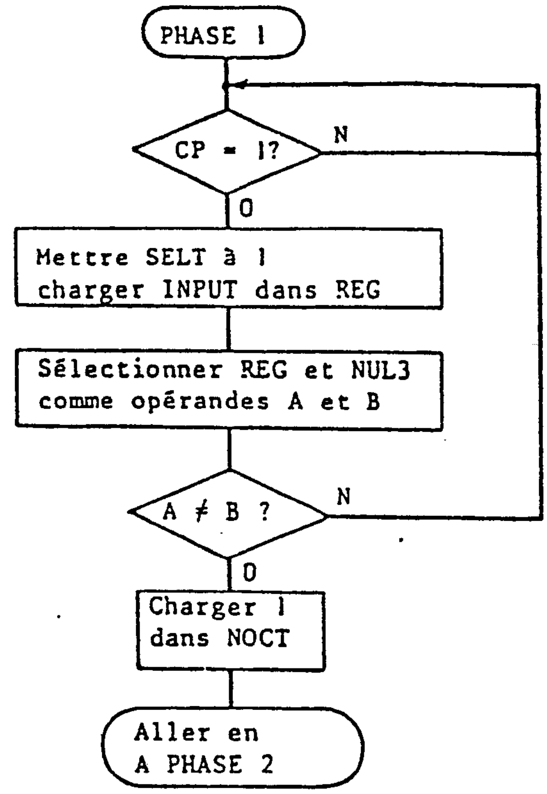


FIG.9

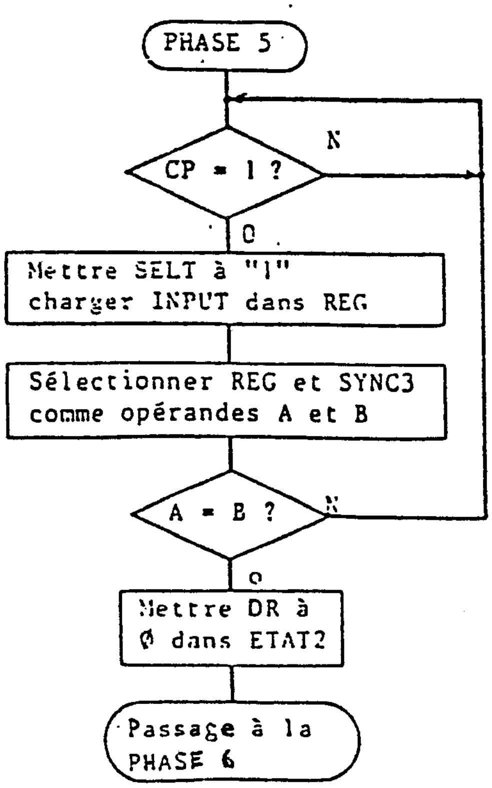


FIG.10

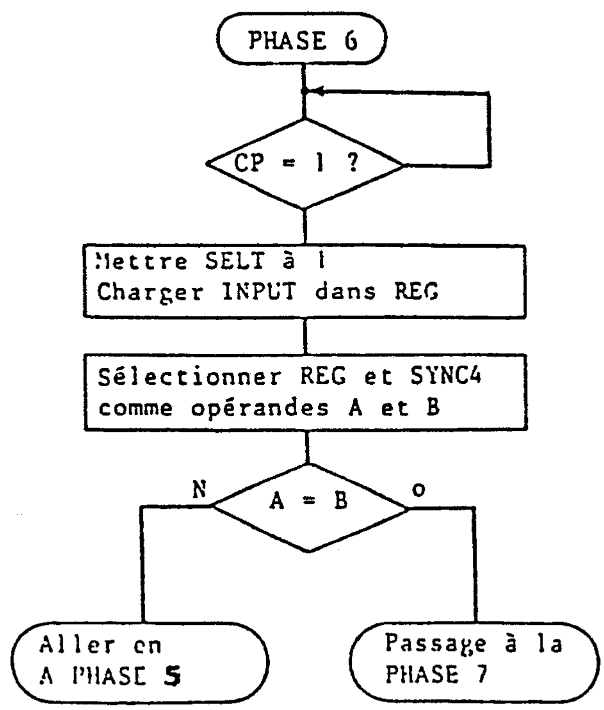

FIG.6a

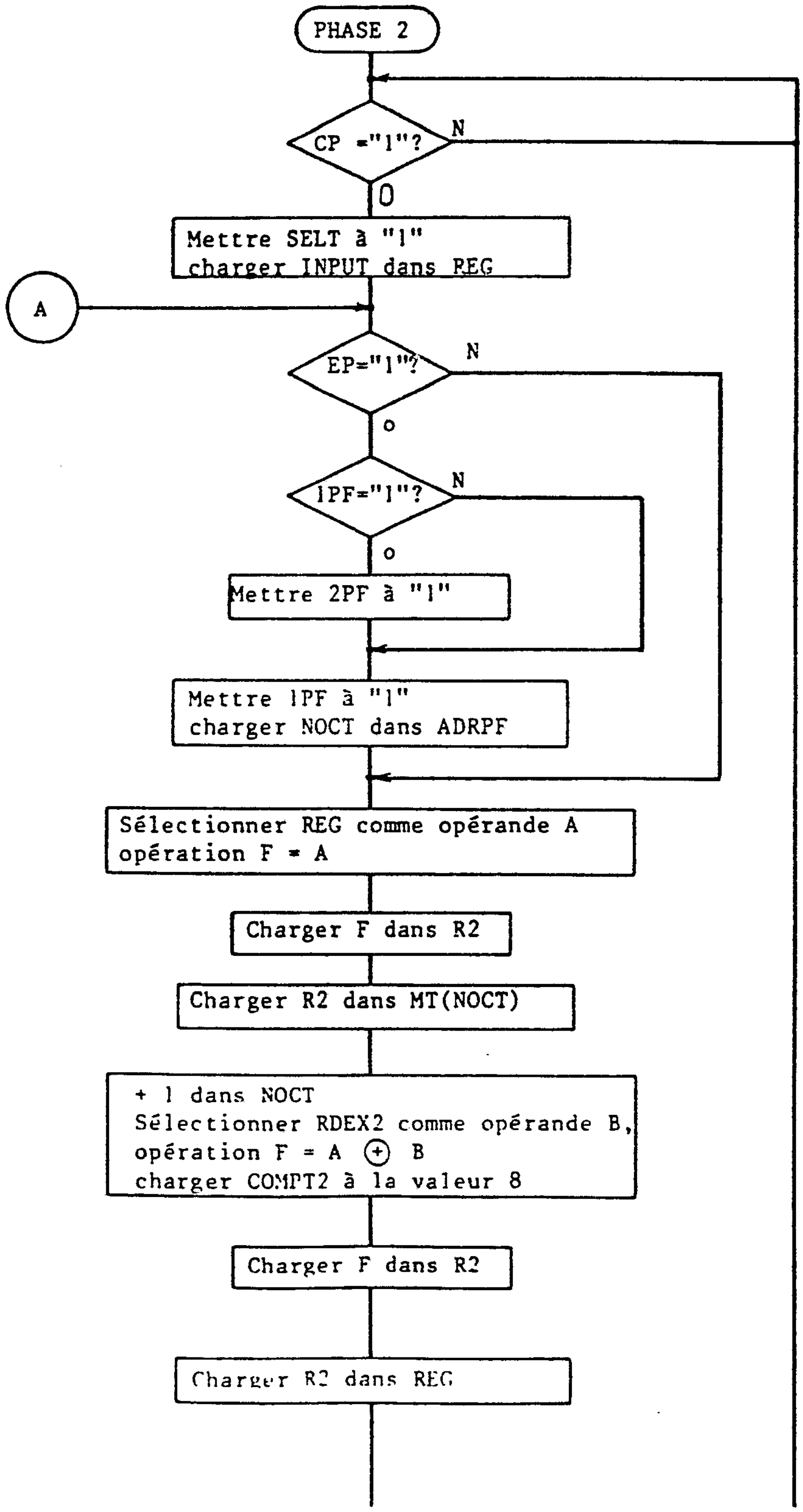

PHASE 2
CP ="1"?
N
O
Mettre SELT à "1"
charger INPUT dans REG
A
EP="1"?
N
o
1PF="1"?
N
o
Mettre 2PF à "1"
Mettre 1PF à "1"
charger NOCT dans ADRPF
Sélectionner REG comme opérande A
opération F = A
Charger F dans R2
Charger R2 dans MT(NOCT)
+ 1 dans NOCT
Sélectionner RDEX2 comme opérande B,
opération F = A ⊕ B
charger COMPT2 à la valeur 8
Charger F dans R2
Charger R2 dans REG

FIG.6b

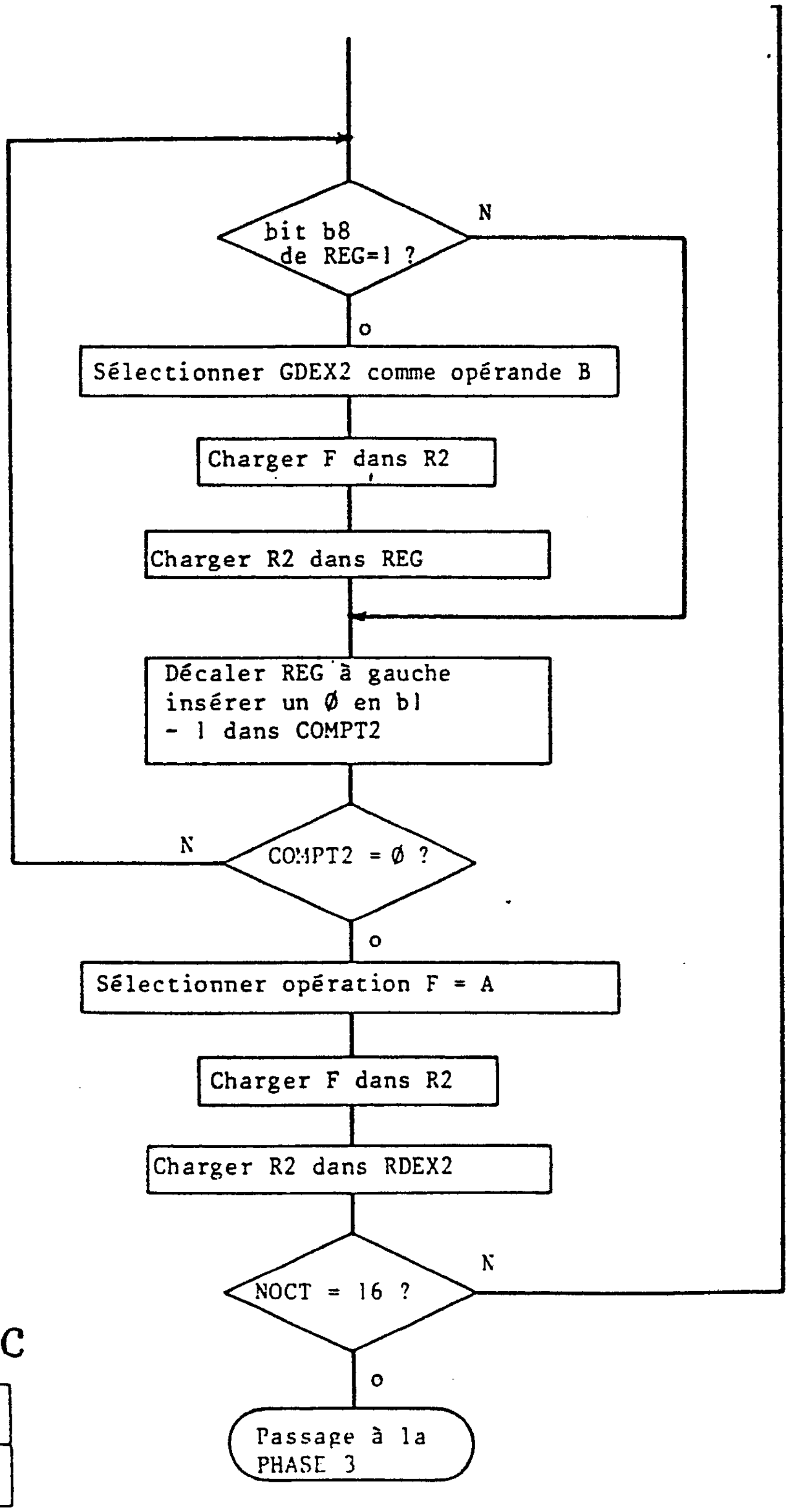
bit b8
de REG=1 ?
N
o
Sélectionner GDEX2 comme opérande B
Charger F dans R2
Charger R2 dans REG
Décaler REG à gauche
insérer un Ø en b1
- 1 dans COMPT2
N
COMPT2 = Ø ?
o
Sélectionner opération F = A
Charger F dans R2
Charger R2 dans RDEX2
N
NOCT = 16 ?
o
Passage à la
PHASE 3

FIG.6c

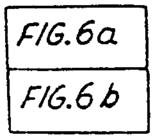
FIG.6a
FIG.6b

FIG.7

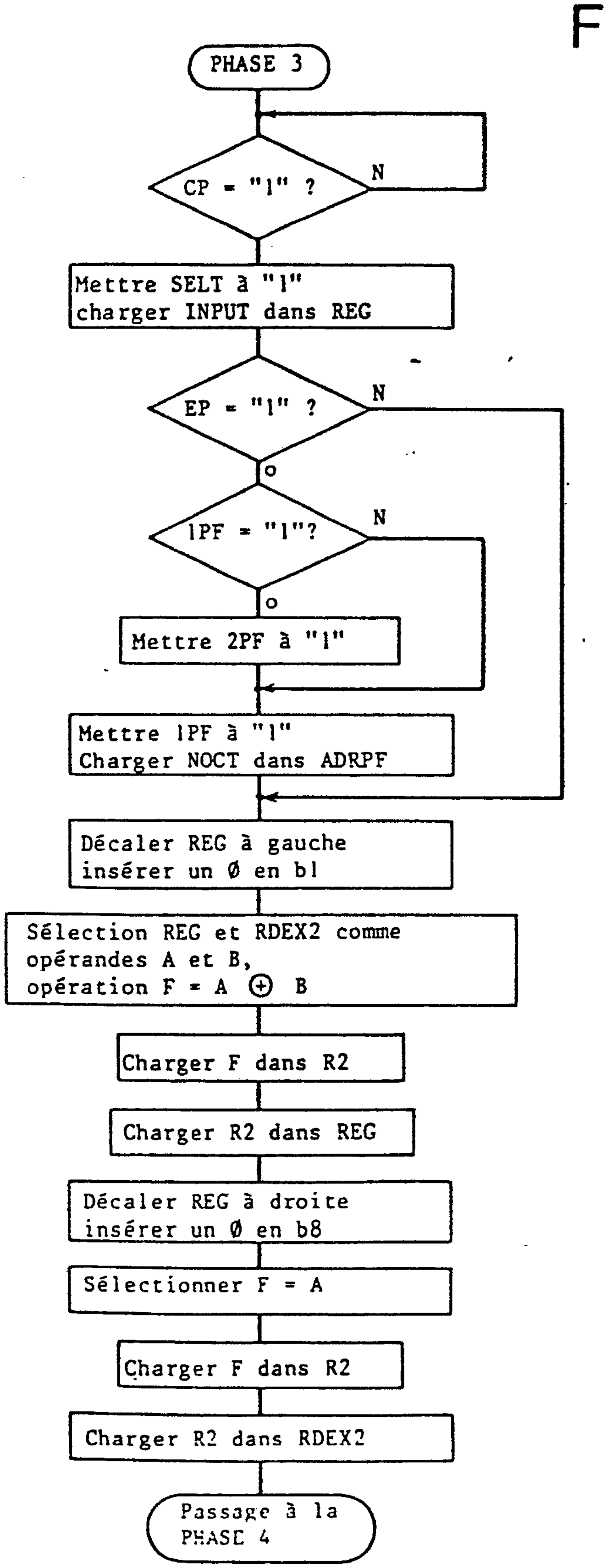
PHASE 3
CP = "1" ?
N
Mettre SELT à "1"
charger INPUT dans REG
EP = "1" ?
N
O
1PF = "1"?
N
O
Mettre 2PF à "1"
Mettre 1PF à "1"
Charger NOCT dans ADRPF
Décaler REG à gauche
insérer un Ø en b1
Sélection REG et RDEX2 comme
opérandes A et B,
opération F = A ⊕ B
Charger F dans R2
Charger R2 dans REG
Décaler REG à droite
insérer un Ø en b8
Sélectionner F = A
Charger F dans R2
Charger R2 dans RDEX2
Passage à la
PHASE 4

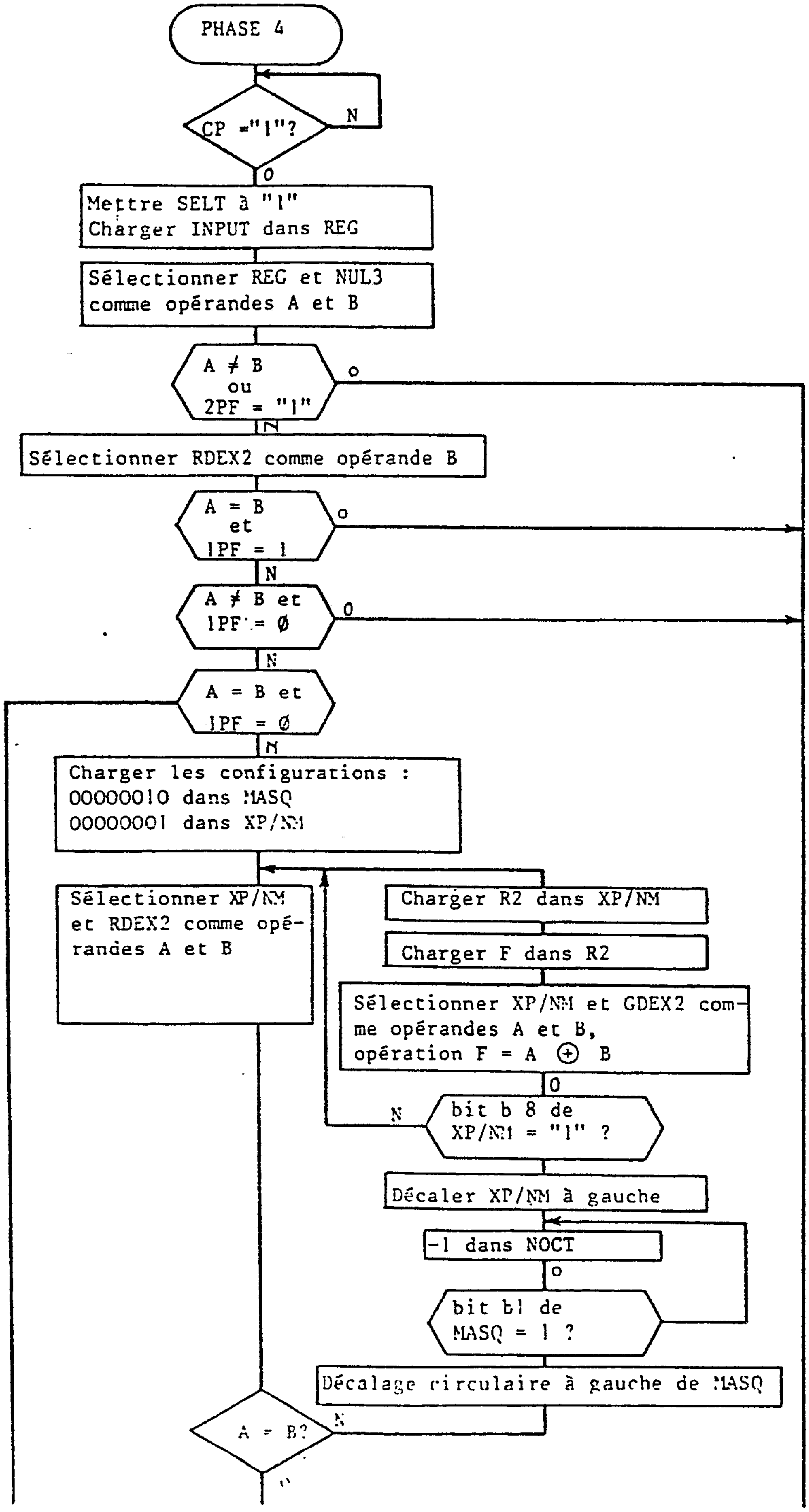
PHASE 4
CP ="1"?
N
0
Mettre SELT à "1"
Charger INPUT dans REG
Sélectionner REG et NUL3
comme opérandes A et B
A ≠ B
ou
2PF = "1"
o
N
Sélectionner RDEX2 comme opérande B
A = B
et
1PF = 1
o
N
A ≠ B et
1PF = Ø
0
N
A = B et
1PF = Ø
N
Charger les configurations :
00000010 dans MASQ
00000001 dans XP/NM
Sélectionner XP/NM
et RDEX2 comme opé-
randes A et B
Charger R2 dans XP/NM
Charger F dans R2
Sélectionner XP/NM et GDEX2 com-
me opérandes A et B,
opération F = A ⊕ B
0
bit b 8 de
XP/NM = "1" ?
N
Décaler XP/NM à gauche
-1 dans NOCT
o
bit b1 de
MASQ = 1 ?
Décalage circulaire à gauche de MASQ
A = B?
N

FIG.8b

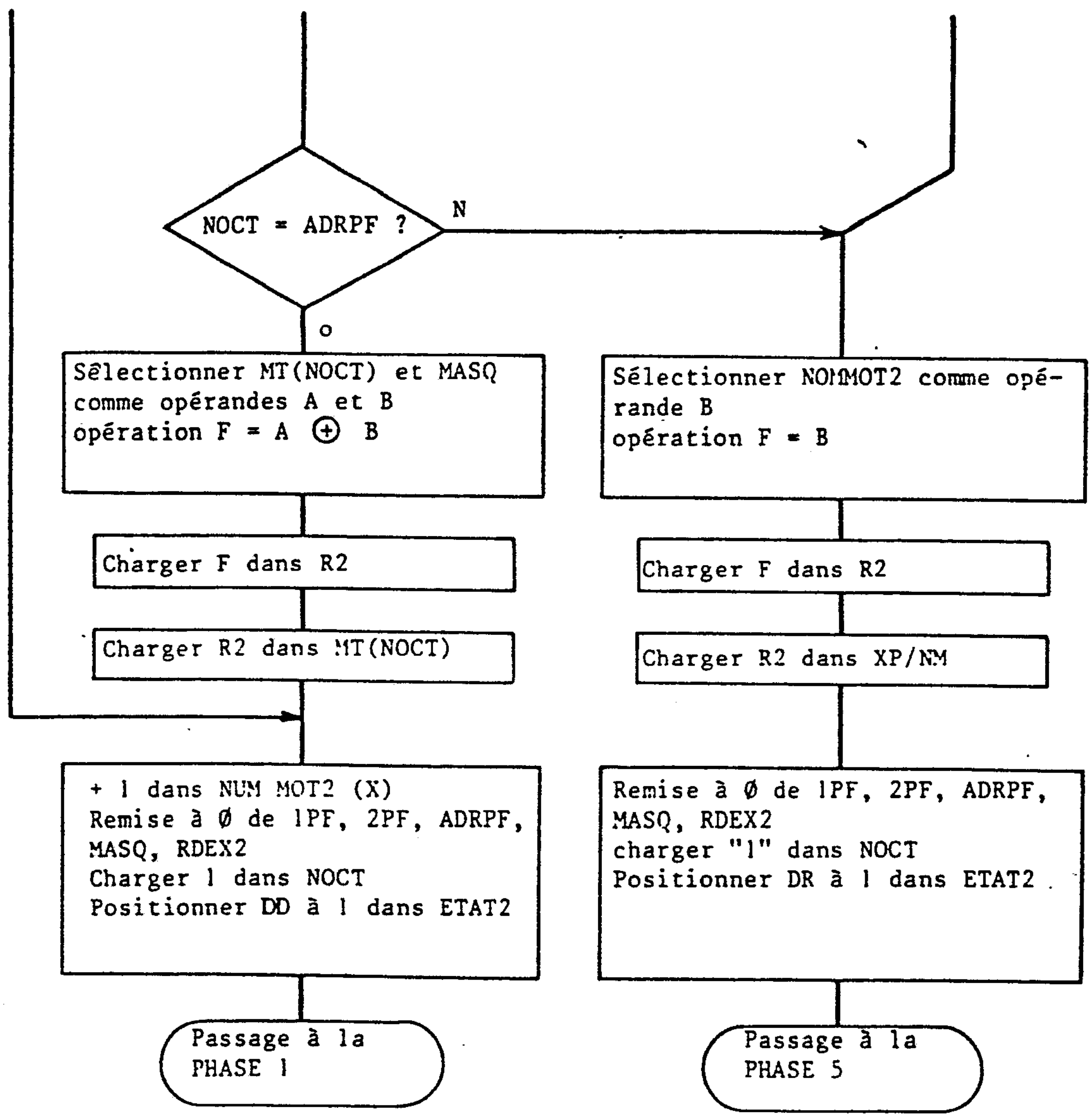
NOCT = ADRPF ?
N
O
Sélectionner MT(NOCT) et MASQ comme opérandes A et B opération F = A ⊕ B
Charger F dans R2
Charger R2 dans MT(NOCT)
+ 1 dans NUM MOT2 (X)
Remise à Ø de 1PF, 2PF, ADRPF, MASQ, RDEX2
Charger 1 dans NOCT
Positionner DD à 1 dans ETAT2
Passage à la PHASE 1
Sélectionner NOMMOT2 comme opérande B opération F = B
Charger F dans R2
Charger R2 dans XP/NM
Remise à Ø de 1PF, 2PF, ADRPF, MASQ, RDEX2
charger "1" dans NOCT
Positionner DR à 1 dans ETAT2
Passage à la PHASE 5

FIG.8c

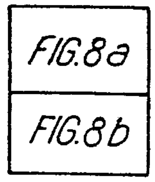
FIG.8a
FIG.8b

FIG.11

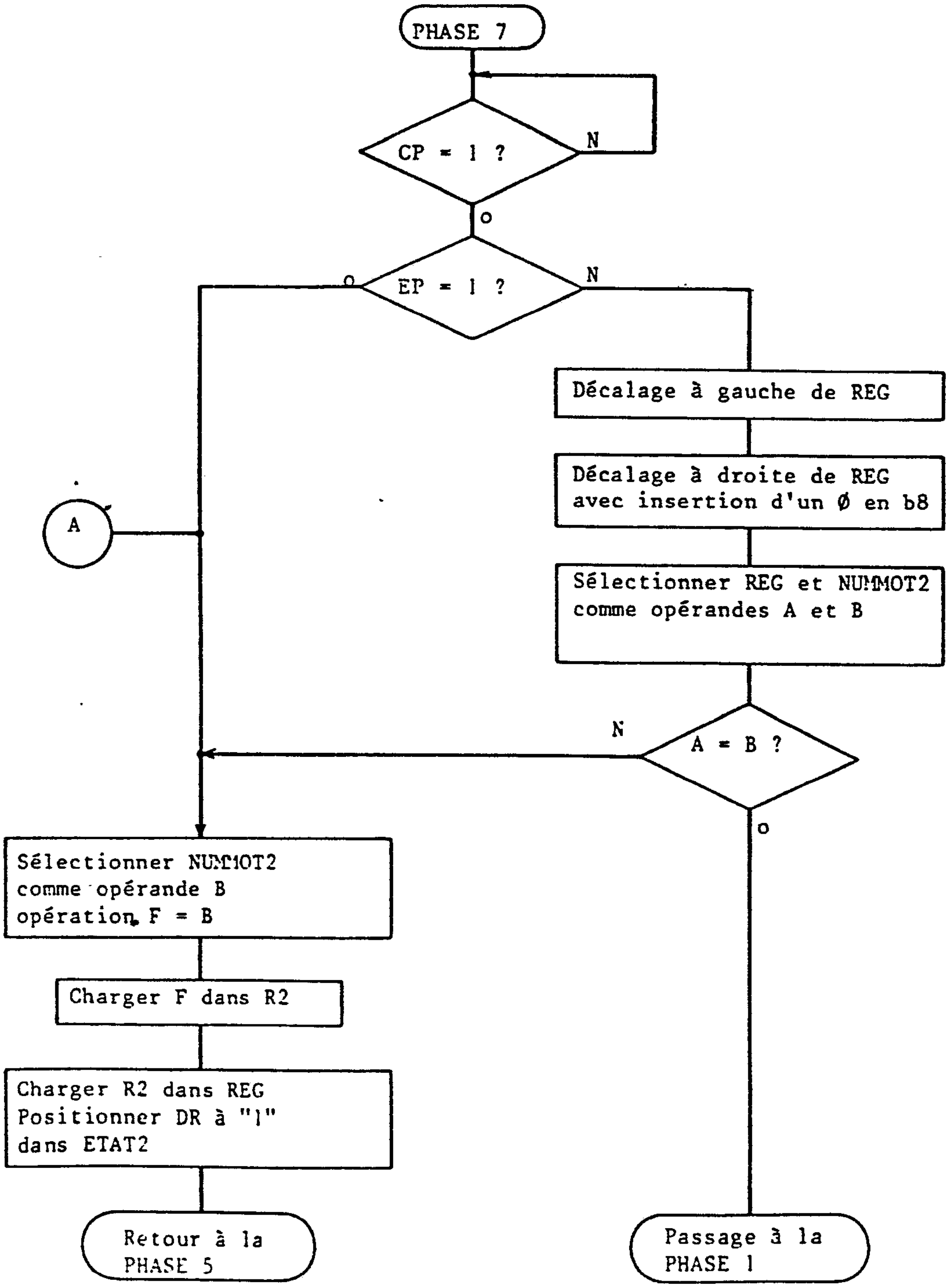
PHASE 7
CP = 1 ?
N
O
EP = 1 ?
O
N
Décalage à gauche de REG
Décalage à droite de REG
avec insertion d'un Ø en b8
Sélectionner REG et NUMMOT2
comme opérandes A et B
A
N
A = B ?
O
Sélectionner NUMMOT2
comme opérande B
opération F = B
Charger F dans R2
Charger R2 dans REG
Positionner DR à "1"
dans ETAT2
Retour à la
PHASE 5
Passage à la
PHASE 1